(19) Europäisches Patentamt / European Patent Office / Office européen des brevets

(11) **EP 3 162 014 B1**

(12) **EUROPEAN PATENT SPECIFICATION**

(45) Date of publication and mention
of the grant of the patent:
**09.05.2018 Bulletin 2018/19**

(21) Application number: **15730295.1**

(22) Date of filing: **13.06.2015**

(51) Int Cl.:
**H04L 27/26** $^{(2006.01)}$    **H04L 5/00** $^{(2006.01)}$

(86) International application number:
**PCT/IB2015/054488**

(87) International publication number:
**WO 2016/001781 (07.01.2016 Gazette 2016/01)**

(54) **CREST FACTOR REDUCTION OF CARRIER AGGREGATED SIGNALS**

SCHEITELFAKTORVERRINGERUNG VON TRÄGERAGGREGIERTEN SIGNALEN

RÉDUCTION DU FACTEUR DE CRÊTE DE SIGNAUX AVEC AGRÉGATION DE PORTEUSES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.06.2014 US 201414319599**

(43) Date of publication of application:
**03.05.2017 Bulletin 2017/18**

(73) Proprietor: **Telefonaktiebolaget LM Ericsson
(publ)
164 83 Stockholm (SE)**

(72) Inventors:
• **FEHRI, Bilel
Ottawa, Ontario K1T 4M2 (CA)**
• **BOUMAIZA, Slim
Waterloo, Ontario N2T 2R7 (CA)**
• **SICH, Edward
Kemptville, Ontario N2T 2R7 (CA)**

(74) Representative: **Zacco Sweden AB
P.O. Box 5581
114 85 Stockholm (SE)**

(56) References cited:
**WO-A1-2013/066639    US-A1- 2007 201 582**

• **FEHRI BILEL ET AL: "Joint dual-band crest factor
reduction and digital predistortion of power
amplifiers driven by inter-band carrier
aggregated signals", 2014 IEEE MTT-S
INTERNATIONAL MICROWAVE SYMPOSIUM
(IMS2014), IEEE, 1 June 2014 (2014-06-01), pages
1-4, XP032615326, DOI:
10.1109/MWSYM.2014.6848542 [retrieved on
2014-07-02]**

**Description**

Field of the Disclosure

This written description is directed to radio transmitters, and in particular, to crest factor reduction of carrier aggregated signals in radio transmitters of a communication system.

Background

An absence of frequency spectrum bands that can support wide transmission bandwidths gives rise to intra-band or inter-band aggregation of multiple carriers according to specific sets of technical requirements. Such carrier aggregated signals have characteristics, such as high peak to average power ratio (PAPR), also commonly referred to as crest factor (CF), and wide bandwidth. The amplification of these carrier aggregated signals by a single power amplifier (PA) poses several challenges. A PA is required to maintain good power efficiency over multiple frequency bands. This has motivated recent research attempts to develop high efficiency, multiband and broadband devices such as Doherty PAs and envelope tracking systems. In addition, due to the high CF of the carrier aggregated signals, these PAs are often required to operate in the large back off region from their peak power to meet linearity requirements. Consequently, these PAs yield poor power efficiency.

Several techniques have been devised for crest factor reduction (CFR) of single band signals and consequently enhance PA efficiency and reduce the dynamic-range requirement imposed on digital to analog converters. These techniques can be divided into two categories: distortion-less methods (commonly called linear CFR techniques), such as selected mapping, partial transmit sequence, tone injection, tone reservation, and coding; and distortion-based methods (also called nonlinear CFR techniques) such as clipping/windowing, companding, active constellation extension (ACE), and generalized ACE methods.

Linear techniques can achieve greater CF reduction than their nonlinear counterparts without altering signal quality. However, linear techniques usually require modifications to the receiver that may be incompatible with existing communication systems. Linear techniques have been applied to multicarrier/single-standard signals through proper modulation and coding. However, the generalization of linear techniques to carrier aggregated signals is not possible due to the dissimilarity between the modulation schemes employed in each carrier.

The nonlinear CFR techniques are generally carefully applied to obtain the highest possible CF reduction while not exceeding the distortion threshold. These techniques, and in particular, the clipping/windowing technique, have been applied to multi-carrier signals co-located in the same spectrum band. However application of clipping/windowing techniques to carrier aggregated signals, especially when each carrier is located in different and widely spaced frequency bands, is very challenging because the clipping/windowing techniques may require very high, and thus, impractical sampling rates.

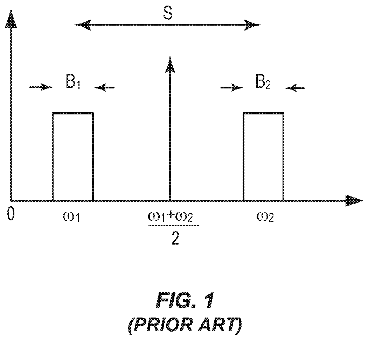

A carrier aggregated signal over two bands, such as shown in FIG. 1, can be expressed as

$$x(t) = x_1(t) + x_2(t) = \tilde{x}_1(t)e^{j\omega_1 t} + \tilde{x}_2(t)e^{j\omega_2 t} \qquad (1)$$

where x(t) is the carrier aggregated signal, $x_1(t)$ and $x_2(t)$ are the mixed mode signals in each band, and $\tilde{x}_1(t)$ and $\tilde{x}_2(t)$ denote the baseband envelopes of $x_1(t)$ and $x_2(t)$ around the angular frequencies $\omega_1$ and $\omega_2$, respectively. As shown in FIG. 1, the individual signals $x_1(t)$ and $x_2(t)$ have bandwidths B1 and B2, respectively, and are separated by a frequency gap S.

The carrier aggregated signal can be represented as a broadband signal with an angular carrier frequency $\left(\frac{\omega_1+\omega_2}{2}\right)$ as given by:

$$x(t) = x_1(t) + x_2(t) = \tilde{x}(t) \cdot e^{j\frac{\omega_1+\omega_2}{2}t}$$

$$= \left(\tilde{x}_1(t)e^{j\frac{\omega_1-\omega_2}{2}t} + \tilde{x}_2(t)e^{j\frac{\omega_2-\omega_1}{2}t}\right)e^{j\frac{\omega_1+\omega_2}{2}t} \qquad (2)$$

where $\tilde{x}(t)$ is the baseband envelope of the carrier aggregated signal. The baseband envelope, x(t), can be amplified using a dual-band or broadband PA instead of two single-band PAs in order to reduce a transmitter's cost and size. The carrier aggregation can result in an increased CF, which unless reduced, will require the designer to inefficiently operate the dual-band PA in its large back-off region.

The classical clipping/windowing nonlinear CFR technique can be applied to $\tilde{x}(t)$. In such case the CFR module may be a single-input single-output (SISO) unit that processes a digitized version of $\tilde{x}(t)$ which is sampled at a frequency $f_s{'}$, where $f_s{'} \geq 2 \cdot (S + \max(B_1/2, B_2/2))$, and $S$, $B_1$ and $B_2$ represent the frequency spacing and the bandwidths of the two signals, respectively. The digitized baseband signal $\tilde{x}(n')$ can then be expressed as follows:

$$\tilde{x}(n') = \tilde{x}_1(n')e^{j\frac{\omega_1 - \omega_2}{2}\frac{n'}{f_s{'}}} + \tilde{x}_2(n')e^{j\frac{\omega_2 - \omega_1}{2}\frac{n'}{f_s{'}}} \tag{3}$$

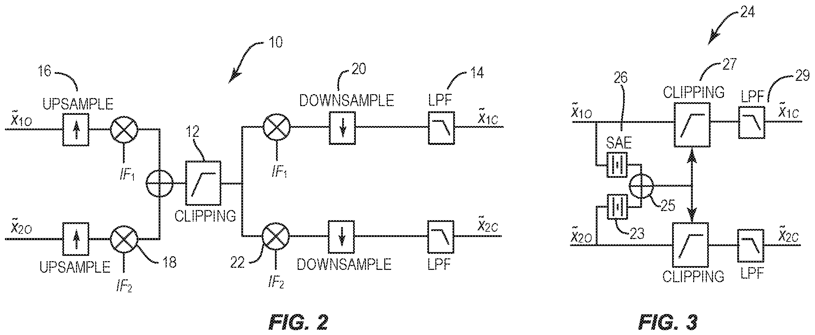

The classical clipping/windowing method consists of monitoring the instantaneous amplitude of the signal envelope, and limiting it to a preset threshold to obtain the targeted CF. A device 10 for implementing the classical clipping/windowing method is shown in FIG. 2. As can be seen, in addition to the clipping 12 and filtering modules 14, the SISO CFR of FIG. 2 includes an up-sampler 16, a digital up-converter 18, a down-sampler 20 and a down-converter 22. As this technique is a nonlinear operation, inband distortions and out of band spectrum regrowth are induced. In order to achieve an acceptable adjacent channel power ratio (ACPR), the clipped signal is filtered. The clipping threshold is set so that the CF is reduced while conforming to error vector magnitude (EVM) and ACPR specifications.

The frequency spacing $S$ between the two carriers is generally significantly greater than the bandwidths of $x_1(t)$ and $x_2(t)$, i.e. $B_1$ and $B_2$, especially in the case of inter-band aggregation scenarios. Hence, $f_s{'}$ would need to be considerably larger than the frequencies $f_{s1}$ and $f_{s2}$ needed to digitize $\tilde{x}_1(t)$ and $\tilde{x}_2(t)$, respectively ($f_{s1} \geq 2 \cdot B_1$, $f_{s2} \geq 2 \cdot B_2$).

For example, assume a carrier aggregated signal is composed of a 15 MHz wide band code division multiple access (WCDMA) signal around 2.1 GHz and a 10 MHz long term evolution (LTE) signal centered in 2.4 GHz. For such a combination, the minimum theoretical sampling frequency $f_s{'}$ must be higher than 610 MHz. This sampling frequency is significantly higher than the sampling frequencies needed to represent the WCDMA and LTE signals individually. The direct application of the SISO clipping/windowing to $\tilde{x}(n')$ is thus seen to imply a high and impractical sampling rate. The high sampling rate requirement associated with the conventional clipping and windowing approach makes this solution sub-optimal in the context of inter-band carrier aggregated signals.

Non-patent disclosure Fehri Bilel et al: "Joint Dual-band Crest Factor Reduction and Digital Predistortion of Power Amplifiers Driven by Inter-Band Carrier Aggregated Signals", 2014 IEEE MTT-S International Microwave Symposium (IMS2014), 1 June 2014, pages 1-4, XP032615326, discloses a signal amplitude estimator for inter-band carrier aggregated signals to assist the effective application of dual-band crest factor reduction (CFR) and digital predistortion (DPD) for enhanced dual-band power amplifier (PA) performance. A clipping/windowing technique is applied to envelopes $\tilde{x}_1(n)$ and $\tilde{x}_2(n)$ of a dual-band signal. Given a maximum tolerable error vector magnitude (EVM), a clipping threshold level $Pk$ is set and clipped envelopes $\tilde{x}_{1c}(n)$ and $\tilde{x}_{2c}(n)$ are computed as follows:

$$\text{If } |\tilde{x}_1(n)| + |\tilde{x}_2(n)| > Pk$$

$$=> \quad \begin{aligned} |\tilde{x}_{1c}(n)| &= \frac{|\tilde{x}_1(n)|}{(|\tilde{x}_1(n)| + |\tilde{x}_2(n)|)} Pk \\[2mm] |\tilde{x}_{2c}(n)| &= \frac{|\tilde{x}_2(n)|}{(|\tilde{x}_1(n)| + |\tilde{x}_2(n)|)} Pk \end{aligned}$$

Summary

The present disclosure advantageously provides methods and systems for crest factor reduction of multi-standard carrier aggregated signals according to the independent claims. Preferred embodiments of the method and the system are recited in the dependent claims.

Brief Description of the Drawing Figures

The accompanying drawing figures incorporated in and forming a part of this specification illustrate several aspects of the disclosure, and together with the description serve to explain the principles of the disclosure.

FIG. 1 is a diagram of two carrier signals separated by a frequency span;
FIG. 2 is a block diagram of a known crest factor reduction circuit;
FIG. 3 is a block diagram of a crest factor reduction circuit constructed in accordance with principles of the present disclosure;

FIG. 4 is a graph of two carrier signals and the signal resulting from their combination;

FIG. 5 is a block diagram of a crest factor reduction circuit constructed in accordance with principles of the present disclosure;

FIG. 6 is a graph of experimental error vector magnitude (EVM) performance for a single-input single-output (SISO) crest factor reduction circuit and a dual-input dual-output (DIDO) crest factor reduction circuit;

FIG. 7 is a graph of power output of crest factor reduction circuits for SISO and DIDO;

FIG. 8 is a graph of experimental EVM performance for a SISO and DIDO crest factor reduction circuits;

FIG. 9 is a graph of power output of crest factor reduction circuits for SISO and DIDO;

FIG. 10 is a graph of experimental EVM performance of the two component carrier crest factor reduction technique (2CC-CFR) versus that of conventional crest factor reduction (CFR) for two component carriers having unequal average power levels;

FIG. 11 is a graph illustrating experimental spectrum regrowth due to the nonlinear clipping operation when using 2CC-CFR versus the conventional CFR for two component carriers having unequal average power levels;

FIG. 12 is a graph of experimental EVM performance of 2CC-CFR versus that of conventional CFR for two component carriers having different EVM requirements;

FIG. 13 is a graph illustrating experimental spectrum regrowth due to the nonlinear clipping operation when using 2CC-CFR versus the conventional CFR for two component carriers having different EVM requirements;

FIG. 14 is a graph of experimental EVM performance for SISO and tri-band crest factor reduction circuits;

FIG. 15 is a graph of power output of crest factor reduction circuits for SISO and tri-band circuits;

FIG. 16 is a flowchart of an exemplary process for achieving crest factor reduction according to principles of the present disclosure; and

FIG. 17 is a flowchart of further steps of an exemplary process for achieving crest factor reduction according to principles of the present disclosure.

Detailed Description

Before describing in detail exemplary embodiments that are in accordance with the present disclosure, it is noted that the embodiments reside primarily in combinations of apparatus components and processing steps related to crest factor reduction of inter-band multi-standard carrier aggregated signals. Accordingly, the system and method components have been represented where appropriate by conventional symbols in the drawings, showing only those specific details that are pertinent to understanding the embodiments of the present disclosure so as not to obscure the disclosure with details that will be readily apparent to those of ordinary skill in the art having the benefit of the description herein.

As used herein, relational terms, such as "first" and "second," "top" and "bottom," and the like, may be used solely to distinguish one entity or element from another entity or element without necessarily requiring or implying any physical or logical relationship or order between such entities or elements.

Referring now to the drawing figures, where like reference designators refer to like elements, there is shown in FIG. 3 a dual-input dual-output (DIDO) crest factor reduction (CFR) system 24, that includes a signal amplitude estimator (SAE) 26 to compute the instantaneous amplitude of the carrier aggregated signal using the baseband signals of the two carriers as a first step of the CFR process. The SAE 26 may be implemented using various types of hardware, including but not limited to application specific integrated circuitry, a digital signal processor or by a processor executing programmatic software to carry out the processing functions described herein. Such programmatic software may be stored in a non-transitory memory device.

First, the envelope of the carrier aggregated signal expression given in equation (2) can be rewritten as follows:

$$\tilde{x}(t) = |\tilde{x}_1(t)|e^{j\left(\frac{\omega_1-\omega_2}{2}t+\varphi_1(t)\right)} + |\tilde{x}_2(t)|e^{j\left(\frac{\omega_2-\omega_1}{2}t+\varphi_2(t)\right)}, \qquad (4)$$

where $\varphi_1(t)$ and $\varphi_2(t)$ are the instantaneous phase of $\tilde{x}_1(t)$ and $\tilde{x}_2(t)$, respectively. The terms $\left(\frac{\omega_1-\omega_2}{2}t\right)$ and $\left(\frac{\omega_2-\omega_1}{2}t\right)$ in the exponents imply an additional phase difference between $\tilde{x}_1(t)$ and $\tilde{x}_2(t)$, which occurs at much higher speed than $\varphi_1(t)$ and $\varphi_2(t)$. In fact, the two terms in the right side of equation (4) can be in-phase at a given instant $t_0$ before both baseband envelopes evolve noticeably, i.e.:

$$e^{j\left(\frac{\omega_1-\omega_2}{2}t_0+\varphi_1(t_0)\right)} = e^{j\left(\frac{\omega_2-\omega_1}{2}t_0+\varphi_2(t_0)\right)} = e^{j\varphi_0(t_0)}.$$

At time instant $t_0$, the carrier aggregated signal envelope is given by $\tilde{x}(t_0) = (|\tilde{x}_1(t_0)| + |\tilde{x}_2(t_0)|)\, e^{j\varphi_0(t_0)}$. Hence, the carrier aggregation process yields an instantaneous full constructive addition even if the two carriers' envelopes are out of phase, i.e., $|\tilde{x}(t_0)| = (|\tilde{x}_1(t_0)| + |\tilde{x}_2(t_0)|)$. The envelope of the carrier aggregated signal is therefore given by

$$envelope\left(\tilde{x}_1(t)e^{j\frac{\omega_1-\omega_2}{2}t} + \tilde{x}_2(t)e^{j\frac{\omega_2-\omega_1}{2}t}\right) \cong |\tilde{x}_1(t)| + |\tilde{x}_2(t)|. \quad (5)$$

As a result, the crest factor (CF) of the carrier aggregated signal can be estimated by monitoring the magnitude of the two carriers' baseband signals. Furthermore, equation (5) suggests that the envelope of $\tilde{x}(t)$ can be obtained using the envelopes of $\tilde{x}_1(t)$ and $\tilde{x}_2(t)$ sampled at a rate $f_s = max(f_{s1}, f_{s2})$.

$$envelope\left(\tilde{x}(n)\right) \cong (|\tilde{x}_1(n)| + |\tilde{x}_2(n)|). \quad (6)$$

Thus, the envelope can be estimated as a sum of the amplitudes of the plurality of carrier signals sampled at a Nyquist rate that is a maximum of the Nyquist rates of the individual carrier signals. Since the bandwidth associated with the carrier signals is substantially less than a spacing between carrier signals, the sampling of the envelope is at a rate that is substantially less than the spacing between the carrier signals. For example, a typical bandwidth associated with a carrier signal may be 15 MHz, whereas the spacing between carrier signals may be 300 MHz. Sampling at the Nyquist rate based on the bandwidth associated with a carrier signal would result in sampling at a rate of about 30 MHz, which is substantially less than a sampling rate of 330 MHz, i.e., less than the sampling rate by an order of 10, based on spacing between carrier signals. The amplitudes are computed by magnitude operators 23 and the sum of the amplitudes of the plurality of carrier signals is obtained by an adder 25. The magnitude operators 23 and the adder 25 for computing the expression of equation (6) may be referred to collectively as a signal amplitude estimator (SAE) or signal amplitude calculator 26.

Thus, one embodiment is an apparatus for reducing a crest factor of inter-band carrier aggregated signals, the inter-band carrier aggregated signals comprising a plurality of carrier signals. The apparatus includes a plurality of signal amplitude calculators 26, one for each of the plurality of carrier signals. Each of the plurality of signal amplitude calculators 26 is configured to calculate an amplitude of a corresponding carrier signal of the plurality of carrier signals. The adder 25 is configured to add the calculated carrier signal amplitudes to produce a composite signal that is an estimate of an envelope of the plurality of carrier signals. A plurality of clippers 27, one for each of the plurality of carrier signals, are configured to perform a clipping operation on a respective one of the plurality of carrier signals. Low pass filters 29 reduce out-of-band spectrum regrowth. Note that although FIG. 3 shows functionality for crest factor reduction of only two bands, embodiments may provide crest factor reduction for signals with three or more bands by direct extension of the principles described with reference to FIG. 3.

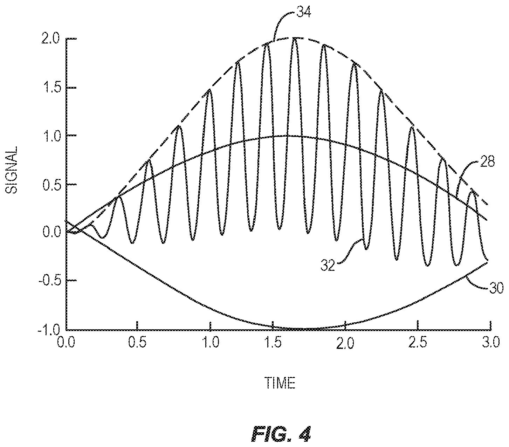

FIG. 4 shows two sine waves 28 and 30 that are combined to produce a resulting signal 32. The summation of the two magnitudes of the two sine waves 28 and 30 provide a good estimate of an envelope 34 of the resulting carrier aggregated signal 32. Hence, given an arbitrary clipping threshold C, the CFR of a carrier aggregated signal composed of two carriers with respective envelopes $\tilde{x}_1(n)$ and $\tilde{x}_2(n)$ can be obtained by clipping each carrier baseband signal as follows:

$$\text{If } |\tilde{x}_1(n)| + |\tilde{x}_2(n)| > C \quad (7)$$

$$=> \begin{aligned} \left|\tilde{x}_{1\_clipped}(n)\right| &= \frac{|\tilde{x}_1(n)|}{|\tilde{x}_1(n)| + |\tilde{x}_2(n)|} \cdot C \\ \left|\tilde{x}_{2\_clipped}(n)\right| &= \frac{|\tilde{x}_2(n)|}{|\tilde{x}_1(n)| + |\tilde{x}_2(n)|} \cdot C \end{aligned}$$

The clipping function may be performed by a clipper 27 for each carrier signal. The clipping may be performed, for example, by application specific integrated circuitry, or other combinations of hardware and/or software described above. The CFR of equation (7) is referred to herein as two component carrier crest factor reduction (2CC-CFR) with proportional peak reduction.

In another embodiment, given an arbitrary clipping threshold C, and a carrier aggregate signal peak $S$, $S = |\tilde{x}_1(n)| + |\tilde{x}_2(n)|$, where $\tilde{x}_1(n)$ and $\tilde{x}_2(n)$ are the envelopes of the two component carriers, define the threshold exceed variable $E$ as $E = S$ - C, the CFR can be implemented by subtracting half of the threshold exceeding (i.e., $\frac{E}{2} = \frac{S-C}{2}$) from the magnitude of each of the two component carriers, as given in equation (8).

$$
\text{If} \quad (S = |\tilde{x}_1(n)| + |\tilde{x}_2(n)|) > C \tag{8}
$$

$$
=> \quad \begin{aligned} \left|\tilde{x}_{1\_clipped}(n)\right| &= |\tilde{x}_1(n)| - (S - C)/2 \\ \left|\tilde{x}_{2\_clipped}(n)\right| &= |\tilde{x}_2(n)| - (S - C)/2 \end{aligned}
$$

The clipping function of equation (8) may be performed by a clipper 27 for each carrier signal. The clipping may be performed, for example, by application specific integrated circuitry, or other combinations of hardware and/or software described above. The CFR of equation (8) is referred to herein as 2CC-CFR with equal peak reduction per component carrier.

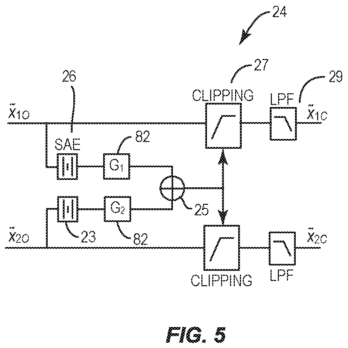

The power of each component carrier of a two component carrier aggregated signal can be significantly different to accommodate the radio link requirements. If $P_1$ and $P_2$ represent the average power levels of the two component carriers, the 2CC-CFR techniques of equations (7) and (8) can be applied to their scaled envelop signals, $G_1\tilde{x}_1(n)$ and $G_2\tilde{x}_2(n)$, where $G_1 = \sqrt{\dfrac{P_1}{mean(|\tilde{x}_1(n)|^2/100)}}$ and $G_2 = \sqrt{\dfrac{P_2}{mean(|\tilde{x}_2(n)|^2/100)}}$. In one embodiment, the SAE 26 further includes weighting circuits, or functions, 82 that operate to apply the weights $G_1$ and $G_2$ to the instantaneous amplitudes of the corresponding component carriers output by the magnitude operators 23, as illustrated in FIG. 5. The clippers 27 then provide a CFR scheme that clips the component carriers if the sum of the weighted instantaneous amplitudes of the component carriers is greater than the predefined clipping threshold C. Specifically, in one embodiment, the CFR system 24 performs 2CC-CFR with proportional peak reduction for two component carriers having unequal power levels as follows:

$$
\text{If} \quad (G_1 \cdot |\tilde{x}_1(n)| + G_2 \cdot |\tilde{x}_2(n)|) > C \tag{9}
$$

$$
=> \quad \begin{aligned} \left|\tilde{x}_{1\_clipped}(n)\right| &= \frac{G_1 \cdot |\tilde{x}_1(n)|}{G_1 \cdot |\tilde{x}_1(n)| + G_2 \cdot |\tilde{x}_2(n)|} \cdot C \\ \left|\tilde{x}_{2\_clipped}(n)\right| &= \frac{G_2 \cdot |\tilde{x}_2(n)|}{G_1 \cdot |\tilde{x}_1(n)| + G_2 \cdot |\tilde{x}_2(n)|} \cdot C \end{aligned}
$$

Note that in the case of equal power levels for the two bands, equation (9) could be simplified to equation (7). The CFR of equation (9) is referred to herein as 2CC-CFR with proportional peak reduction for two component carriers having unequal power levels.

Likewise, in another embodiment, the CFR system 24 operates to estimate the peaks of the carrier aggregated signal and perform 2CC-CFR with equal peak reduction per component carrier for component carriers having unequal power as follows:

$$
\text{If} \quad (S = G_1 \cdot |\tilde{x}_1(n)| + G_2 \cdot |\tilde{x}_2(n)|) > C \tag{10}
$$

$$
=>=> \quad \begin{aligned} \left|\tilde{x}_{1\_clipped}(n)\right| &= G_1 \cdot |\tilde{x}_1(n)| - (S - C)/2 \\ \left|\tilde{x}_{2\_clipped}(n)\right| &= G_2 \cdot |\tilde{x}_2(n)| - (S - C)/2 \end{aligned}
$$

Note that in the case of equal power levels for the two bands, equation (10) could be simplified to equation (8). The CFR of equation (10) is referred to herein as 2CC-CFR with equal peak reduction for two CCs having unequal power levels.

In some carrier aggregation scenarios, different component carriers may have different modulation schemes that impose different error vector magnitude (EVM) requirements. One example is a carrier aggregated signal formed by one quadrature phase shift keying (QPSK) signal and one 64 quadrature amplitude modulated (64 QAM) signal. As per ETSI TS 136 104, "Evolved Universal Terrestrial Radio Access (E-UTRA); Base Station (BS) radio transmission and reception (3GPP TS 36.104 version 11.3.1 Release 11)," V11.3.1, February 2013, the maximum tolerable EVM distortion is 17.5% for the former signal and 8% for the later signal. The 2CC-CFR solution in equation (10) applies the same peak reduction factor to the two component carriers, whereas the 2CC-CFR solution in equation (11) below does not adapt to the signals EVM requirements, but in their contribution to the aggregated peak.

Hence, in both equation (7) and (8), the clipping margin is limited by the lower EVM bound (8% in this example). A better approach is to exploit the extra EVM margin offered by the simpler modulation scheme through unequal peak reduction factors, as given by equation (11).

$$\text{If} \quad (S = |\tilde{x}_1(n)| + |\tilde{x}_2(n)|) > C \qquad (11)$$
$$=> \begin{aligned} \left|\tilde{x}_{1\_clipped}(n)\right| &= |\tilde{x}_1(n)| - \alpha_1 \cdot (S - C) \\ \left|\tilde{x}_{2\_clipped}(n)\right| &= |\tilde{x}_2(n)| - \alpha_2 \cdot (S - C) \end{aligned}$$

In equation (11), $\alpha_1$ and $\alpha_2$ are the two peak reduction factors and satisfy the condition $\alpha_1 + \alpha_2 = 1$. Note that in equation (11), the computation of the peak reduced envelops, $\tilde{x}_{1\_clipped}(n)$ and $\tilde{x}_{2\_clipped}(n)$ involves both $\alpha_1$ and $\alpha_2$, however, the peak estimator remains the same as in equation (11), i.e., $\alpha_1$ and $\alpha_2$ are not needed in the peak estimation. The values of $\alpha_1$ and $\alpha_2$ are jointly varied until the two EVM requirements are met. The CFR of equation (11) is referred to herein as 2CC-CFR with equal peak reduction scaled for different component carrier EVM requirements.

Notably, while the techniques for CFR for component carriers having unequal average power levels and CFR for component carriers having different EVM requirements are described separately above, the two techniques may be combined to provide CFR for component carriers having unequal average power levels and different EVM requirements as follows. Again, if $P_1$ and $P_2$ represent the average power levels of the two component carriers, the proposed CFR technique can be applied to their scaled envelope signals, $G_1\tilde{x}_1(n)$ and $G_2\tilde{x}_2(n)$, where $G_1 = \sqrt{\dfrac{P_1}{mean(|\tilde{x}_1(n)|^2/100)}}$

and $G_2 = \sqrt{\dfrac{P_2}{mean(|\tilde{x}_2(n)|^2/100)}}$. The peak estimation of the carrier aggregated signal and the 2CC-CFR with unequal power levels and different EVM requirements can be implemented as follows:

$$\text{If} \quad (S = G_1 \cdot |\tilde{x}_1(n)| + G_2 \cdot |\tilde{x}_2(n)|) > C \qquad (12)$$
$$=> \begin{aligned} \left|\tilde{x}_{1\_clipped}(n)\right| &= G_1 \cdot |\tilde{x}_1(n)| - \alpha_1 \cdot (S - C). \\ \left|\tilde{x}_{2\_clipped}(n)\right| &= G_2 \cdot |\tilde{x}_2(n)| - \alpha_2 \cdot (S - C) \end{aligned}$$

In equation (12), $\alpha_1$ and $\alpha_2$ are the two peak reduction factors and satisfy the condition $\alpha_1 + \alpha_2 = 1$. Note that in equation (12), the computation of the peak reduced envelopes, $\tilde{x}_{1\_clipped}(n)$ and $\tilde{x}_{2\_clipped}(n)$, involves both $\alpha_1$ and $\alpha_2$. The values of $\alpha_1$ and $\alpha_2$ are jointly varied until the two EVM requirements are met.

Note that the results for two carriers described above can be extended straightforwardly to more than two carriers. A carrier aggregated signal over multibands is given by:

$$x(t) = \sum_{i=1}^{N} x_i(t) = Re\left(\sum_{i=1}^{N} \tilde{x}_i(t)e^{j\omega_i t}\right),$$

where $N$ is the number of carrier aggregated bands, $x(t)$ is the carrier aggregated signal, $x_i(t)$ is the mixed mode signals in the $i^{th}$ band, and $\tilde{x}_i(t)$ denotes the baseband envelopes of $x_i(t)$ around the angular frequency $\omega_i$.

In order to clip the signal $x(t)$ by conventional means, it may be modeled as one envelope signal around a carrier angular frequency $\omega_0$ given by a middle point of the two spectrum extremes:

$$\omega_0 = \frac{1}{2}\left(\max(\omega_i; \ i = 1..N) + \min(\omega_i; \ i = 1..N)\right).$$

In this case, the sampling rate of the signal should be

$$f_s' \geq 2 \cdot \left(S + \max\left(\frac{B_i}{2}\right)\right),$$

where $f_s'$ is the required sampling rate for the mixed signal, $S = \frac{1}{2 \cdot \pi} \cdot (\max(\omega_i; i = 1..N) - \min(\omega_i; i = 1..N))$, and $B_i$ is the bandwidth of signal $\tilde{x}_i(t)$. Alternatively, it can be shown that,

$$envelope\big(x(t)\big) \cong \sum_{i=1}^{N} |\tilde{x}_i(t)|.$$

As a result, the CF of the carrier aggregated signal can be estimated by monitoring the magnitude of the different carriers' baseband signals. The envelope of $\tilde{x}(t)$ can be obtained using the envelopes of $\tilde{x}_i(t)$ sampled at a rate

$$f_s = max\left(f_{(s_i)} = \frac{1}{B_i}; i = 1..N\right),$$ where $B_i$ is the bandwidth of signal $|x_i(t)|$.

Hence, given an arbitrary clipping threshold $C$, the CFR of a carrier aggregated signal using proportional peak reduction can be obtained by clipping each carrier baseband signal as follows:

$$\forall k \in \{1..N\}, \text{If} \sum_{i=1}^{N} |\tilde{x}_i(t)| > C \qquad (13)$$

$$=> |\tilde{x}_{k\_clipped}(n)| = \frac{|\tilde{x}_k(n)|}{\sum_{i=1}^{N}|\tilde{x}_i(t)|} \cdot C.$$

For the case of a tri-band signal, the tri-input tri-output CFR with proportional peak reduction is implemented as:

$$\text{If } |\tilde{x}_1(n)| + |\tilde{x}_2(n)| + |\tilde{x}_3(n)| > C \qquad (14)$$

$$|\tilde{x}_{1\_clipped}(n)| = \frac{|\tilde{x}_1(n)|}{|\tilde{x}_1(n)| + |\tilde{x}_2(n)| + |\tilde{x}_3(n)|} \cdot C$$

$$=> |\tilde{x}_{2\_clipped}(n)| = \frac{|\tilde{x}_2(n)|}{|\tilde{x}_1(n)| + |\tilde{x}_2(n)| + |\tilde{x}_3(n)|} \cdot C$$

$$|\tilde{x}_{3\_clipped}(n)| = \frac{|\tilde{x}_3(n)|}{|\tilde{x}_1(n)| + |\tilde{x}_2(n)| + |\tilde{x}_3(n)|} \cdot C$$

Similarly, given an arbitrary clipping threshold $C$, the CFR of a carrier aggregated signal having an arbitrary number (N) of component carriers with unequal power levels can be obtained by clipping each carrier baseband signal as follows. If $P_i$ represents the average power levels of the $i^{th}$ component carriers, the proposed CFR technique can be applied to its scaled envelope signals, $G_i \tilde{x}_i(n)$, where $G_i = \sqrt{\frac{P_i}{mean(|\tilde{x}_i(n)|^2/100)}}$. The peak estimation of the carrier aggregated signal and the multiple component carrier CFR (MCC-CFR) with unequal power levels can be implemented as follows:

$$\forall k \in \{1..N\}, \text{If } \left( S = \sum_{i=1}^{N} G_i \cdot |\tilde{x}_i(t)| \right) > C \qquad (15)$$

$$=> \left| \tilde{x}_{k\_clipped}(n) \right| = \frac{G_k \cdot |\tilde{x}_k(t)|}{S} \cdot C$$

Similarly, given an arbitrary clipping threshold *C*, the CFR of a carrier aggregated signal having an arbitrary number (N) of component carriers with unequal power levels and different EVM requirements can be obtained by clipping each carrier baseband signal as follows. If $P_i$ represents the average power levels of the $i^{th}$ component carriers, the proposed CFR technique can be applied to its scaled envelope signals, $G_i\tilde{x}_i(n)$, where $G_i = \sqrt{\frac{P_i}{mean(|\tilde{x}_i(n)|^2/100)}}$. The peak estimation of the carrier aggregated signal and the MCC-CFR with unequal power levels and different EVM requirements can be implemented as follows:

$$\forall k \in \{1..N\}, \text{If } \left( S = \sum_{i=1}^{N} G_i \cdot |\tilde{x}_i(t)| \right) > C \qquad (16)$$

$$=> \left| \tilde{x}_{k\_clipped}(n) \right| = G_k \cdot |\tilde{x}_k(n)| - \alpha_k \cdot (S - C)$$

In equation (16), $\alpha_k$ is the peak reduction factor for the component carrier $\tilde{x}_k(n)$. The peak reduction factors, $\alpha_1,.., \alpha_N$, satisfy the condition $\sum_{i=1}^{N} \alpha_i = 1$ and are jointly varied until the EVM requirements of the different component carriers are met. Note that while equation (16) gives a CFR technique for multiple component carrier (MCC) with unequal power levels and different EVM requirements, it can be easily modified to provide MCC-CFR for unequal power levels (i.e., by removing the $\alpha_k$ term or to provide MCC-CFR for different EVM requirements (i.e., by removing the $G_k$ term.

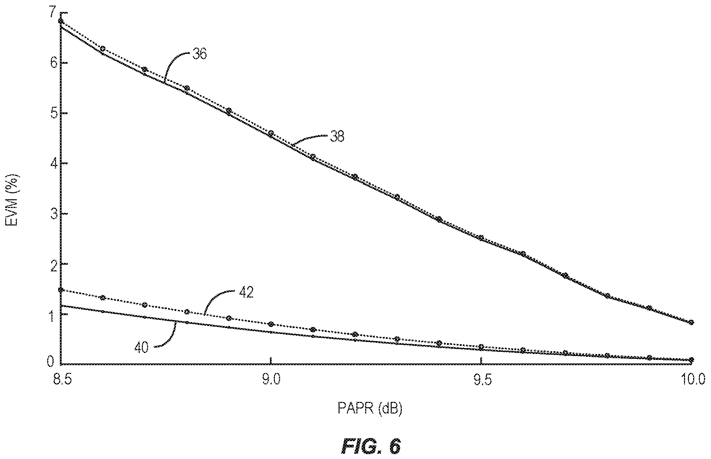

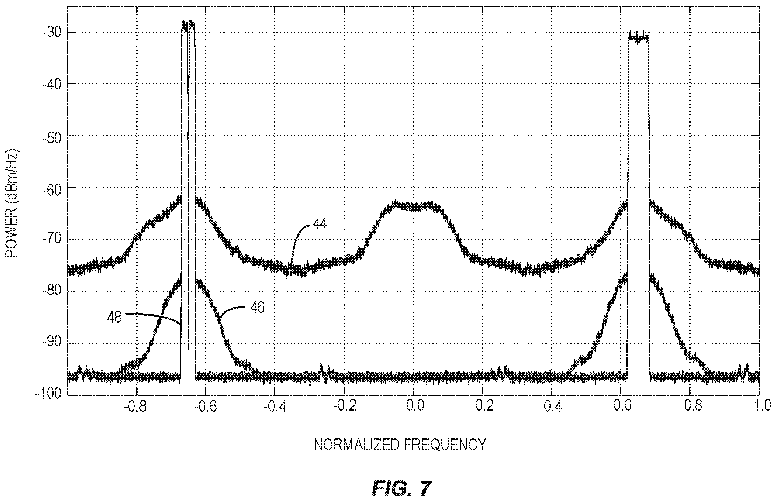

To test the 2CC-CFR technique for proportional peak reduction of equation (7) described above, an inter-band carrier aggregated signal was synthesized, composed of a 10 MHz 2C wideband code division multiple access (WCDMA) signal and a 15 MHz long term evolution (LTE) signal, separated by 300 MHz. Both the DIDO and the single-input single-output (SISO) CFR approaches were applied to the synthesized carrier aggregated signal. The SISO CFR technique was carried out at a sampling frequency equal to $f_s' = 610$ MHz. Next, the DIDO CFR technique was applied to the two separate baseband components and was performed at a sampling frequency equal to $f_s = 92.16$ MHz. EVM performance of the two approaches vs. targeted peak to average power ratio (PAPR) is shown in FIG. 6 and spectrum regrowth due to the nonlinear clipping operation is shown in FIG. 7. FIG. 6 shows the EVM performance for band 1 with SISO CFR 36, EVM performance for band 2 with SISO CFR 38, EVM performance for band 1 with DIDO CFR 40 and EVM performance for band 2 with DIDO CFR 42. Clearly, using the CFR methods described herein result in a substantial reduction in EVM. Similarly, FIG. 7 shows power versus frequency for SISO CFR 44, DIDO CFR 46, and DIDO CFR with filtering 48. Clearly, the CFR methods described herein result in substantial reduction of out of band signals arising due to distortion.

In order to remove the out of band spectrum regrowth of the DIDO CFR 46, the clipped signal is filtered by a filtering/windowing process 29. Filtering results are given by the DIDO CFR with filtering curve 48. It is noted that the filtering is not applied to the SISO CFR due to its poor performance. Table 1 summarizes the original signal characteristics and the results of the DIDO CFR with and without filtering. The PAPR of the original frequency aggregated signal is decreased from 10.5 dB to 9 dB with around 0.7 % EVM. The clipping/windowing iterations enable the removal of the spectrum regrowth at the cost of increasing the EVM to 1.3%, which is still acceptable by different modulation schemes, e.g., binary phase shift keying (BPSK), QPSK, etc.

| Table 1 | Signal | PAPR (dB) | EVM (%) | ACLR (dBc) |
|---|---|---|---|---|
| | 2C WCDMA @ band 1 | 7.9 | 0 | 68 |
| Original signal | LTE15 @ band 2 | 9.2 | 0 | 65 |
| | Frequency aggregated | 10.5 | | |

(continued)

| Table 1 | Signal | PAPR (dB) | EVM (%) | ACLR (dBc) |
|---|---|---|---|---|
| Clipped signal | 2C WCDMA @ band 1 | 7.9 | 0.6 | 48 |
| | LTE15 @ band 2 | 9.2 | 0.8 | 50 |
| | Frequency aggregated | 9 | | |
| Clipped & filtered signal | 2C WCDMA @ band 1 | 7.9 | 1.3 | 68 |
| | LTE15 @ band 2 | 9.2 | 1.3 | 65 |
| | Frequency aggregated | 9.1 | | |

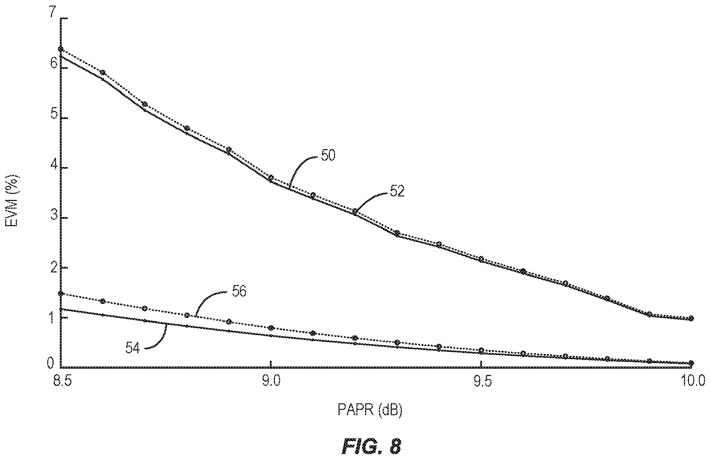

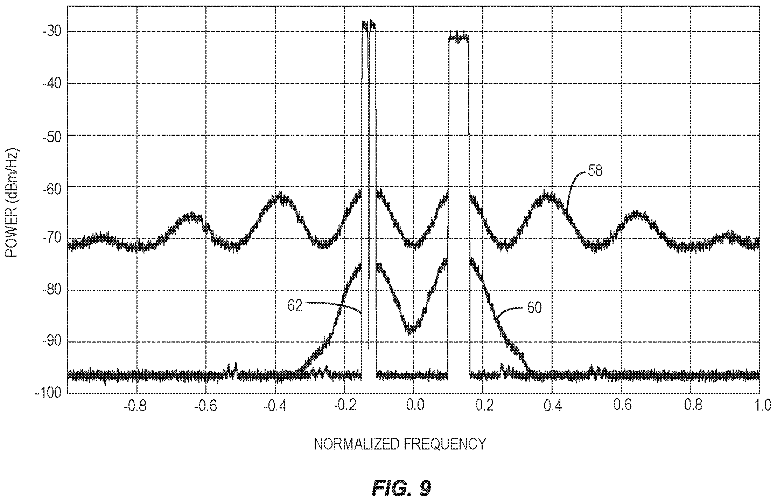

Concerning the SISO CFR performance, in addition to its high sampling rate of up to five times the Nyquist rate of the input signal, it is shown in FIG. 6 and FIG. 7 that EVM and spectrum regrowth is significantly poor when compared to the DIDO CFR case. The EVM performance of the two approaches vs. targeted PAPR is shown in FIG. 8 and spectrum regrowth due to the nonlinear clipping operation is shown in FIG. 9. FIG. 8 shows EVM for band 1 with SISO CFR 50, EVM for band 2 with SISO CFR 52, EVM for band 1 with DIDO CFR 54 and DIDO for band 2 with DIDO CFR 56. FIG. 9 shows power versus frequency for SISO CFR 58, DIDO CFR 60 and DIDO CFR with filtering 62.

The original, clipped, and clipped and filtered signal characteristics for the synthesized inter-band carrier aggregated signals discussed above are shown below in Table 2. Although the results are comparable with the high frequency separation case, the spectrum plot of the SISO CFR signal 58 in FIG. 9 reveals the existence of intermodulation distortion components due to the nonlinear clipping operation acting on the two signals simultaneously. This is unlike the DIDO CFR case 60, 62, where each signal is clipped separately. Hence, the SISO technique generates more distortion, both in-band and out of band.

| Table 2 | Signal | PAPR (dB) | EVM (%) | ACLR (dBc) |
|---|---|---|---|---|
| Original signal | 2C WCDMA @ band 1 | 7.9 | 0 | 68 |
| | LTE15 @ band 2 | 9.2 | 0 | 65 |
| | Frequency aggregated | 10.4 | | |
| Clipped signal | 2C WCDMA @ band 1 | 7.9 | 0.9 | 45 |
| | LTE15 @ band 2 | 9.2 | 1.1 | 48 |
| | Frequency aggregated | 8.8 | | |
| Clipped & filtered signal | 2C WCDMA @ band 1 | 7.9 | 1.3 | 68 |
| | LTE15 @ band 2 | 9.2 | 1.4 | 65 |
| | Frequency aggregated | 9 | | |

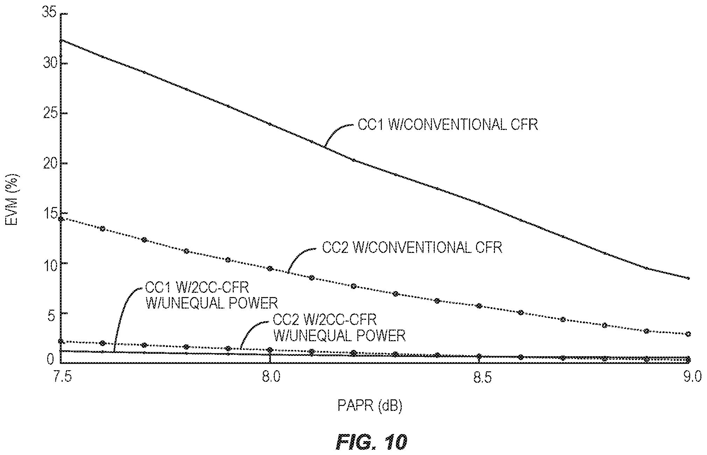

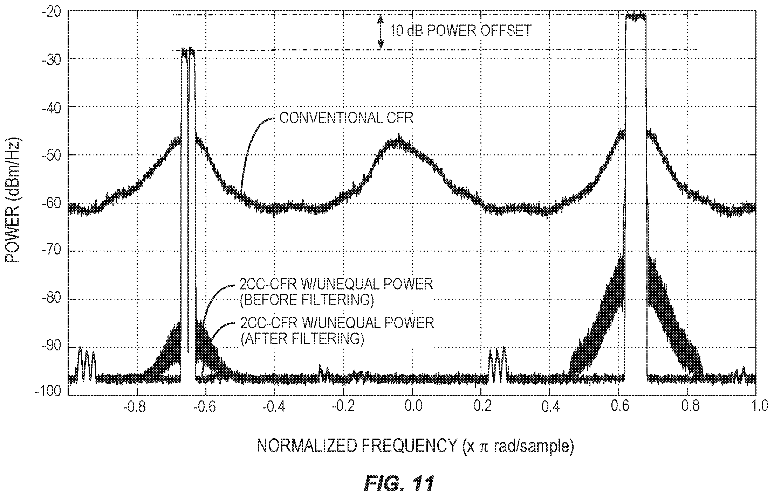

Embodiments are also described above for 2CC-CFR for component carriers having unequal power levels. In order to validate the particular embodiment of equation (9), a test signal composed by the same component carriers chosen above was used. However, in this case the two component carriers signals were assigned unequal average powers, i.e. the second component carrier's average power is set to be 10 dB higher than the first component carrier. Both the 2CC-CFR of equation (9) for carriers with unequal power levels and the conventional CFR approaches were applied to the synthetized carrier aggregated signal. The conventional CFR technique was carried out at a sampling frequency equal to $f_s' = 610$ Msps. Next, the 2CC-CFR technique of equation (9) was applied to the two separate component carriers and was performed at a sampling frequency equal to $f_s = 92.16$ Msps. The clipping/windowing iterations applied to the 2CC-CFR of equation (9) enabled the removal of the spectrum regrowth engendered by the nonlinear clipping operation at the targeted CF. EVM performance of the two approaches vs. targeted CF is shown in FIG. 10 and spectrum regrowth due to the nonlinear clipping operation is shown in FIG. 11.

Table 3 below summarizes the original signal characteristics and the results of the CFR with and without filtering. In particular, Table 3 provides PAPR and EVM of the original and peak reduced signals for the two component carriers with unequal power levels. The CF of the original frequency aggregated signal is decreased from 9.9 dB to 7.9 dB with around 1.7% and 2.7% EVM distortion, and -55 dBc and -50 dBc adjacent channel leakage power ratio (ACLR) for the first and second bands, respectively. It is found that the second band was slightly more distorted than the first band (1% higher EVM and 5 dB higher ACLR). However, in the case of the conventional CFR, as shown in FIG. 10, the first component carrier was severely distorted when compared to the second component carrier with 20% more EVM distortion and 10 dB more ACLR distortion (-15 dBc and -25 dBc ACLR for band 1 and band 2, respectively).

| Table 3 | Signal | PAPR (dB) | EVM (%) | ACLR (dBc) |
|---|---|---|---|---|
| Original signal | 2C WCDMA @ band 1 | 7.9 | 0 | -68 |
| | LTE15 @ band 2 | 9.2 | 0 | -65 |
| | Frequency aggregated | 9.9 | | |
| Clipped signal | 2C WCDMA @ band 1 | 7.9 | 1.7 | -45 |
| | LTE15 @ band 2 | 9.2 | 2.7 | -48 |
| | Frequency aggregated | 7.9 | | |
| Clipped & filtered signal | 2C WCDMA @ band 1 | 7.9 | 1.8 | -68 |
| | LTE15 @ band 2 | 9.2 | 2.8 | -65 |
| | Frequency aggreagated | 8 | | |

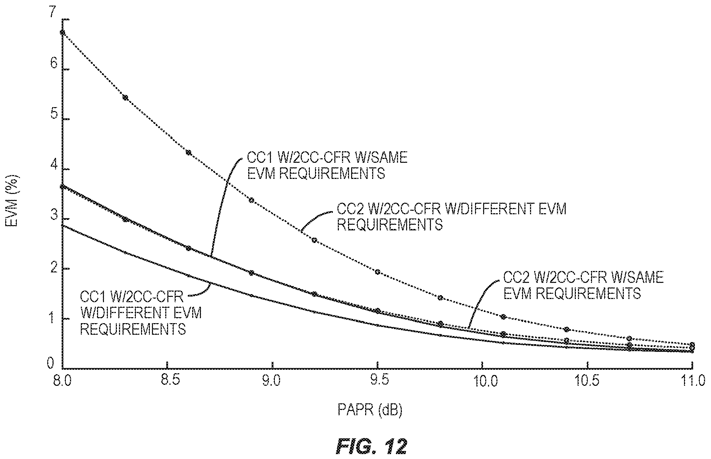

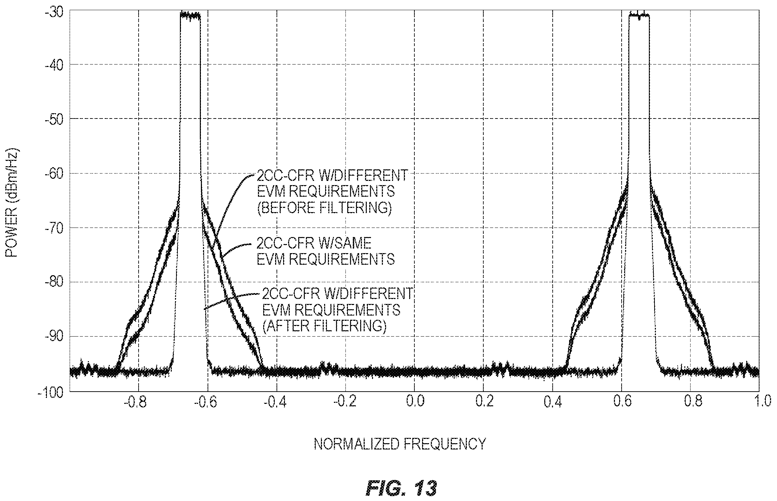

Embodiments are also described above for 2CC-CFR for component carriers having different EVM requirements. In order to validate the particular embodiment of equation (11), a carrier aggregated signal composed of a 15 MHz LTE 64 QAM signal and a 15 MHz LTE QPSK signal, separated by 300 MHz was synthesized. As explained above, the EVM specification for the 64 QAM signal is 8% and for the QPSK signal is 17.5 %. Both the CFR for component carriers with equal EVM requirements of equation (8) and the CFR for carrier with different EVM requirements of equation (11) were applied to the synthetized carrier aggregated signal. Both 2CC-CFR techniques were applied to the two separate component carriers and were performed at a sampling frequency equal to $f_s$ = 92.16 Msps. In total, 4 clipping/windowing iterations were applied to enable the removal of the spectrum regrowth engendered by the nonlinear clipping operation at the targeted CF. EVM performance of the two approaches vs. targeted CF is shown in FIG. 12 and spectrum regrowth due to the nonlinear clipping operation is shown in FIG. 13.

Table 4 below summarizes the original, peak reduced, and filtered signal characteristics of the proposed CFR for component carriers with different EVM requirements. In particular, Table 4 provides PAPR and EVM of the original and peak reduced signals. The CF of the original frequency aggregated signal is decreased from 11.8 dB to 9.05 dB with around 1.4% and 3.2% EVM distortion for the first and second bands, respectively, and -67 dBc ACLR for the two component carriers, respectively. It is shown that that the QPSK signal was more distorted than the 64 QAM signal (2% higher EVM and 7 dB higher ACLR before filtering). However, in the case of the CFR with equal EVM requirements, as shown in FIG. 11, the two bands were equally distorted and the possible peak reduction is limited by the 64 QAM signal requirements.

| Table 4 | Signal | PAPR (dB) | EVM (%) | ACLR (dBc) |
|---|---|---|---|---|
| Original signal | 64QAM LTE @ band 1 | 11.2 | 0 | -67 |
| | QPSK LTE @ band 2 | 10.9 | 0 | -67 |
| | Frequency aggregated | 11.8 | | |
| Clipped signal | 64QAM LTE @ band 1 | | 1.4 | -33 |
| | QPSK LTE @ band 2 | | 3.2 | -40 |
| | Frequency aggregated | 9 | | |
| Clipped & filtered signal | 64QAM LTE @ band 1 | | 1.4 | -67 |
| | QPSK LTE @ band 2 | | 3.2 | -67 |
| | Frequency aggregated | 9.05 | | |

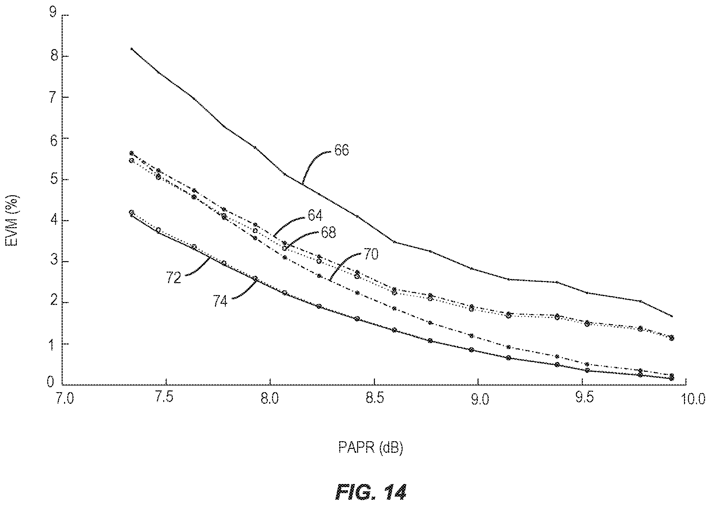

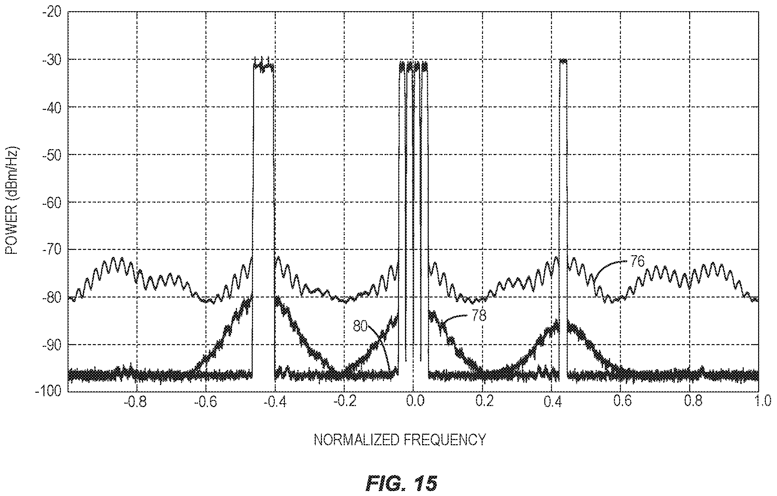

Embodiments are also provided above for MCC-CFR. In this regard, in another example, an inter-band carrier aggregated signal was synthesized, composed of a 15 MHz LTE signal, a 20 MHz 2C WCDMA signal, and a 5 MHz LTE signal. The first and second signals are separated by 100 MHz. The second and third signals are separated by 100 MHz too. Hence, the overall signal separation is 200 MHz. Both the tri-band and SISO CFR approaches were applied to the synthetized carrier aggregated signal. The SISO CFR technique was carried out at a sampling frequency equal to $f_s' = 420$ MHz. Next, the tri-band CFR technique was applied to the two separate baseband components and was performed at a sampling frequency equal to $f_s = 92.16$ MHz. EVM performance of the two approaches vs. targeted PAPR is shown in FIG. 14 and spectrum regrowth due to the nonlinear clipping operation is shown in FIG. 15. FIG. 14 shows EVM for band 1 with SISO CFR 64, EVM for band 2 with SISO CFR 66, EVM for band 3 with SISO CFR 68, EVM for band 1 with tri-band CFR 70, EVM for band 2 with tri-band CFR 72, and EVM for band 3 with tri-band CFR 74. FIG. 15 shows power versus frequency for SISO CFR 76, tri-band CFR 78 and tri-band CFR with filtering 80.

The original and clipped signal characteristics of the synthesized tri-band carrier aggregated signals discussed above are summarized below in Table 5. It is shown that the tri-band CFR has outperformed the SISO CFR for the same reason detailed above.

| Table 5 | Signal | PAPR (dB) | EVM (%) | ACLR (dB) |
|---|---|---|---|---|
| Original signal | LTE15 @ band 1 | 9.2 | 0 | 65 |
| | 4C WCDMA @ band 2 | 9 | 0 | 65 |
| | LTE5 @ band 3 | 9.1 | 0 | 65 |
| | Frequency aggregated | 11.3 | | |
| Clipped signal | LTE15 @ band 1 | 9.2 | 0.6 | 48 |
| | 4C WCDMA @ band 2 | 9 | 0.7 | 51 |
| | LTE5 @ band 3 | 9.1 | 0.5 | 50 |
| | Frequency aggregated | 9.4 | | |
| Clipped & filtered signal | LTE15 @ band 1 | 9.2 | 1.3 | 65 |
| | 4C WCDMA @ band 2 | 9 | 1.4 | 65 |
| | LTE5 @ band 3 | 9.1 | 1.7 | 65 |
| | Frequency aggregated | 9.5 | | |

As an application of the technique described herein, the output signal of the CFR was applied to two power amplifiers, a 45 W Gallium Nitride (GaN) single ended power amplifier (PA) and a 250 W laterally diffused metal oxide semiconductor (LDMOS) Doherty PA. Hence, using the threshold of 2% as a maximum tolerable EVM, the tri-band CFR allowed for about 2 dB reduction in PAPR while the SISO approach was limited to a 0.5 dB reduction in PAPR. Efficiency results are shown in Table 6. It is shown that the achieved CFR of the test signal allows for significant improvement of the effective average power level by about 2 dB, and an increase in power efficiency by up to 5% when the test signal is applied to two amplifiers under test.

| Table 6 | PAPR (dB) | EVM (%) Band 1 | EVM (%) Band 2 | EVM (%) Band 3 | Effective average power | Efficiency (%) |
|---|---|---|---|---|---|---|
| Single ended PA | 11.3 | 0 | 0 | 0 | | 16 |
| | 9.5 | 1.3 | 1.4 | 1.7 | +2dB | 20 |
| Doherty PA | 11.3 | 0 | 0 | 0 | | 40 |
| | 9.5 | 1.3 | 1.4 | 1.7 | +2dB | 45 |

A multiple input multiple output (MIMO) CFR technique suitable for inter-band multi-standard carrier aggregated signals over two and three bands has been described. Compared to the conventional SISO CFR approach, the proposed MIMO CFR allows for a significant decrease of the sampling rate which is made proportional to the maximum of the bandwidth of the two carriers rather than the spacing between them. The proposed CFR approach was demonstrated on a 300 MHz dual-band and a 200 MHz tri-band multi-standard carrier aggregated waveform composed of LTE and WCDMA signals. The CF of the aggregated signal was successfully reduced from 11.3 dB to 9.5 dB while minimizing impacts on EVM and adjacent channel power ratio (ACPR) of the output signal. Note that although examples of CFR for only two and three bands are shown herein, embodiments are not limited to two and three bands. Embodiments for CFR for more than three bands are contemplated and are a straightforward extension of the embodiments discussed herein.

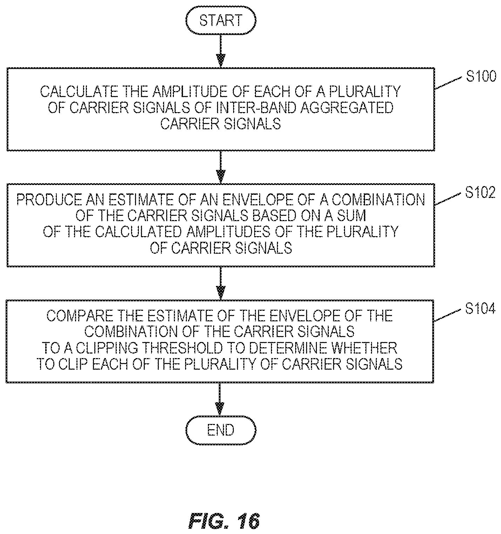

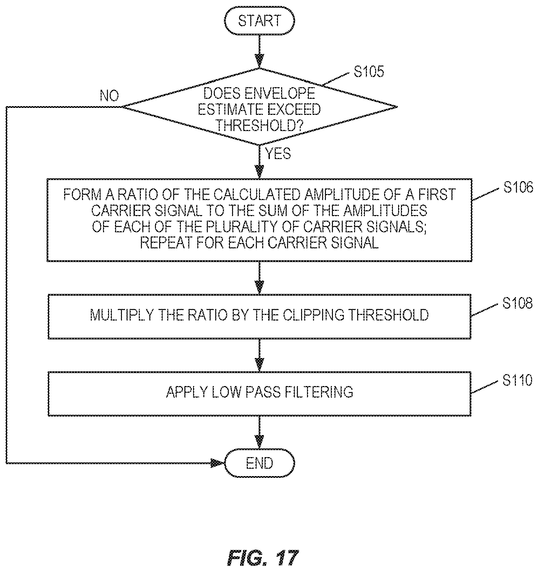

FIG. 16 is a flowchart of an exemplary process for reducing a CF of inter-band carrier aggregated signals. An amplitude of each of a plurality of carrier signals are estimated (block S100). An estimate of an envelope of a combination of the carrier signals is produced based on a sum of the estimated amplitudes of the plurality of carrier signals (block S102). As discussed above, in some embodiments, the estimate of the envelope or peak of the carrier aggregated signal is a function of the sum of the instantaneous amplitudes of the baseband representations of the component carriers. However, in other embodiments where the CFR scheme accounts for unequal average power levels of the component carriers, the instantaneous amplitudes are weighted and the weighted instantaneous amplitudes are summed to provide the estimate of the envelope or peak of the carrier aggregated signal. The estimate of the envelope of the combination of carrier signals is compared to a clipping threshold to determine whether to clip each of the plurality of carrier signals (block S104). Continuing to FIG. 17, if the envelope exceeds the clipping threshold, (block S105), then, in one embodiment, a ratio of the estimated amplitude of a first carrier signal to the sum of the amplitudes of each of the plurality of carrier signals is formed; this ratio is formed for each carrier signal (block S106). Each ratio is multiplied by the clipping threshold (block S108). A low pass filter is then applied to reduce spectral regrowth (block S110). Note that blocks S108 and S110 will vary depending on the particular embodiment.

By estimating the envelope of a combination of carrier signals based on a sum of estimated amplitudes of the individually carriers, one may determine when to clip the carrier signals using a sampling rate that is about equal to twice the bandwidth of the individual carrier signals, rather than at a sampling rate about equal to a spacing between the carrier signals.

It will be appreciated by persons skilled in the art that the present disclosure is not limited to what has been particularly shown and described herein above. In addition, unless mention was made above to the contrary, it should be noted that all of the accompanying drawings are not to scale. A variety of modifications and variations are possible in light of the above teachings without departing from the scope of the disclosure, which is limited only by the following claims.

The following acronyms are used throughout this disclosure.

- 2CC-CFR Two Component Carrier Crest Factor Reduction
- 64 QAM 64 Quadrature Amplitude Modulation
- ACE Active Constellation Extension
- ACLR Adjacent Channel Leakage Power Ratio
- ACPR Adjacent Channel Power Ratio
- BPSK Binary Phase Shift Keying
- CF Crest Factor
- CFR Crest Factor Reduction
- DIDO Dual-Input Dual-Output
- EVM Error Vector Magnitude
- GaN Gallium Nitride
- LDMOS Laterally Diffused Metal Oxide Semiconductor
- LTE Long Term Evolution
- MCC Multiple Component Carrier
- MCC-CFR Multiple Component Carrier Crest Factor Reduction
- MIMO Multiple Input Multiple Output
- MSK Master Session Key
- PA Power Amplifier
- PAPR Peak to Average Power Ratio
- QPSK Quadrature Phase Shift Keying
- SAE Signal Amplitude Estimator
- SISO Single-Input Single-Output
- WCDMA Wideband Code Division Multiple Access

**Claims**

1. A method of providing crest factor reduction for a carrier aggregated signal, comprising:

   estimating a peak of a carrier aggregated signal comprising a plurality of component carriers based on a summation of instantaneous amplitudes of baseband representations of the plurality of component carriers, the number of component carriers in the plurality of component carriers of the carrier aggregated signal is greater than or equal to 2; and

clipping the baseband representations of the plurality of component carriers if the estimated peak of the carrier aggregated signal is greater than a predefined clipping threshold,

wherein estimating the peak of the carrier aggregated signal comprises:

determining the instantaneous amplitudes of the baseband representations of the plurality of component carriers of the carrier aggregated signal;

weighting the instantaneous amplitudes according to average power levels of the plurality of component carriers of the carrier aggregated signal; and

summing the weighted instantaneous amplitudes of the baseband representations of the plurality of component carriers of the carrier aggregated signal to provide the estimated peak of the carrier aggregated signal.

2. The method of claim 1 wherein clipping the baseband representations of the plurality of component carriers comprises applying equal peak reduction to each component carrier of the plurality of component carriers if the estimated peak of the carrier aggregated signal is greater than the predefined clipping threshold, and, optionally, wherein the equal peak reduction is defined as $(S - C)/2$ where $S$ is the summation of the instantaneous amplitudes of the baseband representations of the plurality of component carriers of the carrier aggregated signal and C is the predefined clipping threshold.

3. The method of claim 1 wherein clipping the baseband representations of the plurality of component carriers comprises clipping the baseband representations of the plurality of component carriers according to a crest factor reduction scheme that accounts for different Error Vector Magnitude, EVM, requirements for the plurality of component carriers if the estimated peak of the carrier aggregated signal is greater than the predefined clipping threshold, and, optionally, wherein clipping the baseband representations of the plurality of component carriers according to the crest factor reduction scheme that accounts for different EVM requirements for the plurality of component carriers comprises clipping the baseband representations of the plurality of component carriers according to:

$$\forall k \in \{1..N\}, \text{If} \left( S = \sum_{i=1}^{N} G_i \cdot |\tilde{x}_i(t)| \right) > C$$
$$=> |\tilde{x}_{k\_clipped}(n)| = G_k \cdot |\tilde{x}_k(n)| - \alpha_k \cdot (S - C)$$

where $C$ is the predefined clipping threshold, $\tilde{x}_{i\_clipped}(n)$ is the clipped baseband representation of the component carrier, and $\alpha_1,..., \alpha_N$ are peak reduction factors that satisfy the condition $\sum_{i=1}^{N} \alpha_i = 1.$

4. The method of claim 1 wherein weighting the instantaneous amplitudes comprises, for each component carrier of the plurality of component carriers, computing the weighted instantaneous amplitude for the component carrier as:

$$G_i \cdot |\tilde{x}_i(n)|,$$

where $\tilde{x}_i(n)$ is the baseband representation of the component carrier and $G_i$ is a weighting factor for the component carrier, and, optionally,

wherein the weighting factor for the component carrier is defined as:

$$G_i = \sqrt{\frac{P_i}{mean(|\tilde{x}_i(n)|^2/100)}}$$

where $P_i$ is the average power level of the component carrier.

5. The method of claim 4 wherein clipping the baseband representations of the plurality of component carriers comprises

**14**

clipping the baseband representations of the plurality of component carriers according to a crest factor reduction scheme that accounts for different average power levels for the plurality of component carriers if the estimated peak of the carrier aggregated signal is greater than the predefined clipping threshold.

6. The method of claim 5 wherein clipping the baseband representations of the plurality of component carriers according to the crest factor reduction scheme that accounts for different average power levels for the plurality of component carriers comprises clipping the baseband representations of the plurality of component carriers according to:

$$\forall k \in \{1..N\}, \text{If} \left( S = \sum_{i=1}^{N} G_i \cdot |\tilde{x}_i(t)| \right) > C$$

$$=> \left| \tilde{x}_{k\_clipped}(n) \right| = \frac{G_k \cdot |\tilde{x}_k(t)|}{S} \cdot C$$

where $C$ is the predefined clipping threshold and $\tilde{x}_{i\_clipped}(n)$ is the clipped baseband representation of the component carrier, or
wherein clipping the baseband representations of the plurality of component carriers according to the crest factor reduction scheme that accounts for different average power levels for the plurality of component carriers comprises clipping the baseband representations of the plurality of component carriers according to:

$$\forall k \in \{1..N\}, \text{If} \left( S = \sum_{i=1}^{N} G_i \cdot |\tilde{x}_i(t)| \right) > C$$

$$=> \left| \tilde{x}_{k\_clipped}(n) \right| = G_k \cdot |\tilde{x}_k(n)| - (S - C)$$

where $C$ is the predefined clipping threshold and $\tilde{x}_{i\_clipped}(n)$ is the clipped baseband representation of the component carrier.

7. The method of claim 4 wherein clipping the baseband representations of the plurality of component carriers comprises clipping the baseband representations of the plurality of component carriers according to a crest factor reduction scheme that accounts for both different average power levels for the plurality of component carriers and different Error Vector Magnitude, EVM, requirements for the plurality of component carriers if the estimated peak of the carrier aggregated signal is greater than the predefined clipping threshold, and, optionally, wherein clipping the baseband representations of the plurality of component carriers according to the crest factor reduction scheme that accounts for both different average power levels for the plurality of component carriers and different EVM requirements comprises clipping the baseband representations of the plurality of component carriers according to:

$$\forall k \in \{1..N\}, \text{If} \left( S = \sum_{i=1}^{N} G_i \cdot |\tilde{x}_i(t)| \right) > C$$

$$=> \left| \tilde{x}_{k\_clipped}(n) \right| = G_k \cdot |\tilde{x}_k(n)| - \alpha_k \cdot (S - C)$$

where $C$ is the predefined clipping threshold, $\tilde{x}_{i\_clipped}(n)$ is the clipped baseband representation of the component carrier, and $\alpha_1,..,\alpha_N$ are peak reduction factors that satisfy the condition $\sum_{i=1}^{N} \alpha_i = 1$.

8. A crest factor reduction system (24) for a carrier aggregated signal, comprising:

a signal amplitude estimator (26) configured to estimate a peak of a carrier aggregated signal comprising a plurality of component carriers, the signal amplitude estimator configured to estimate the peak of the carrier aggregated signal based on a summation of instantaneous amplitudes of baseband representations of the plurality of component carriers, the number of component carriers in the plurality of component carriers of the carrier aggregated signal is greater than or equal to 2; and

clipping circuitry (27) configured to clip the baseband representations of the plurality of component carriers if the estimated peak of the carrier aggregated signal is greater than a predefined clipping threshold,

wherein signal amplitude estimator (26) comprises:

a plurality of magnitude operators (23) configured to provide the instantaneous amplitudes of the baseband representations of the plurality of component carriers, each magnitude operator (23) of the plurality of magnitude operators (23) configured to provide the instantaneous amplitude of the baseband representation of a different one of the plurality of component carriers;

weighting circuitry (82) configured to weight the instantaneous amplitudes according to average power levels of the plurality of component carriers of the carrier aggregated signal; and

an adder (25) configured to sum the weighted instantaneous amplitudes of the baseband representations of the plurality of component carriers of the carrier aggregated signal to provide the estimated peak of the carrier aggregated signal.

9. The system (24) of claim 8 wherein the clipping circuitry (27) is configured to clip the baseband representations of the plurality of component carriers based on an equal peak reduction per component carrier scheme if the estimated peak of the carrier aggregated signal is greater than the predefined clipping threshold, and, optionally, wherein the equal peak reduction is defined as $(S - C)/2$ where 5 the summation of the instantaneous amplitudes of the baseband representations of the plurality of component carriers of the carrier aggregated signal and C is the predefined clipping threshold.

10. The system (24) of claim 8 wherein the clipping circuitry (27) is configured to clip the baseband representations of the plurality of component carriers according to a crest factor reduction scheme that accounts for different Error Vector Magnitude, EVM, requirements for the plurality of component carriers if the estimated peak of the carrier aggregated signal is greater than the predefined clipping threshold, and, optionally, wherein the clipping circuitry (27) is configured to clip the baseband representations of the plurality of component carriers according to the crest factor reduction scheme that accounts for different EVM requirements for the plurality of component carriers by clipping the baseband representations of the plurality of component carriers according to:

$$\forall k \in \{1..N\}, \text{If} \left( S = \sum_{i=1}^{N} G_i \cdot |\tilde{x}_i(t)| \right) > C$$
$$=> \left| \tilde{x}_{k\_clipped}(n) \right| = G_k \cdot |\tilde{x}_k(n)| - \alpha_k \cdot (S - C)$$

where $C$ is the predefined clipping threshold, $\tilde{x}_{i\_clipped}(n)$ is the clipped baseband representation of the component carrier, and $\alpha_1, ..., \alpha_N$ are peak reduction factors that satisfy the condition $\sum_{i=1}^{N} \alpha_i = 1.$

11. The system (24) of claim 8 wherein, in order to weight the instantaneous amplitudes, the weighting circuitry (82) is configured to, for each component carrier of the plurality of component carriers, compute the weighted instantaneous amplitude for the component carrier as:

$$G_i \cdot |\tilde{x}_i(n)|,$$

where $\tilde{x}_i(n)$ is the baseband representation of the component carrier and $G_i$ is a weighting factor for the component carrier, and, optionally, wherein the weighting factor for the component carrier is defined as:

$$G_i = \sqrt{\frac{P_i}{mean\,(|\tilde{x}_i(n)|^2/100)}},$$

where $P_i$ is the average power level of the component carrier.

**12.** The system (24) of claim 11 wherein the clipping circuitry (27) is configured to clip the baseband representations of the plurality of component carriers according to a crest factor reduction scheme that accounts for different average power levels for the plurality of component carriers if the estimated peak of the carrier aggregated signal is greater than the predefined clipping threshold.

**13.** The system (24) of claim 12 wherein the clipping circuitry (27) is configured to clip the baseband representations of the plurality of component carriers according to the crest factor reduction scheme that accounts for different average power levels for the plurality of component carriers by clipping the baseband representations of the plurality of component carriers according to:

$$\forall k \in \{1..N\}, \text{If} \left( S = \sum_{i=1}^{N} G_i \cdot |\tilde{x}_i(t)| \right) > C$$

$$=> \left| \tilde{x}_{k\_clipped}(n) \right| = G_k \cdot |\tilde{x}_k(n)| - \alpha_k \cdot (S - C)$$

where $C$ is the predefined clipping threshold and $\tilde{x}_{i\_clipped}(n)$ is the clipped baseband representation of the component carrier, or

wherein the clipping circuitry (27) is configured to clip the baseband representations of the plurality of component carriers according to the crest factor reduction scheme that accounts for different average power levels for the plurality of component carriers by clipping the baseband representations of the plurality of component carriers according to:

$$\forall k \in \{1..N\}, \text{If} \left( S = \sum_{i=1}^{N} G_i \cdot |\tilde{x}_i(t)| \right) > C$$

$$=> \left| \tilde{x}_{k\_clipped}(n) \right| = G_k \cdot |\tilde{x}_k(n)| - \alpha_k \cdot (S - C)$$

where $C$ is the predefined clipping threshold and $\tilde{x}_{i\_clipped}(n)$ is the clipped baseband representation of the component carrier.

**14.** The system (24) of claim 11 wherein the clipping circuitry (27) is configured to clip the baseband representations of the plurality of component carriers according to a crest factor reduction scheme that accounts for both different average power levels for the plurality of component carriers and different Error Vector Magnitude, EVM, requirements for the plurality of component carriers if the estimated peak of the carrier aggregated signal is greater than the predefined clipping threshold, and, optionally,

wherein the clipping circuitry (27) is configured to clip the baseband representations of the plurality of component carriers according to a crest factor reduction scheme that accounts for both different average power levels for the plurality of component carriers and different EVM requirements by clipping the baseband representations of the plurality of component carriers according to:

$$\forall k \in \{1..N\}, \text{If} \left( S = \sum_{i=1}^{N} G_i \cdot |\tilde{x}_i(t)| \right) > C$$

$$=> \left| \tilde{x}_{k\_clipped}(n) \right| = G_k \cdot |\tilde{x}_k(n)| - \alpha_k \cdot (S - C)$$

where $C$ is the predefined clipping threshold, $\tilde{x}_{i\_clipped}(n)$ is the clipped baseband representation of the component carrier, and $\alpha_1,.., \alpha_N$ are peak reduction factors that satisfy the condition $\sum_{i=1}^{N} \alpha_i = 1$.

**Patentansprüche**

1. Verfahren zur Bereitstellung einer Scheitelfaktorverringerung für ein trägeraggregiertes Signal, umfassend:

Schätzen einer Spitze eines trägeraggregierten Signals, das eine Mehrzahl von Komponententrägern umfasst, basierend auf einer Summierung von Momentanamplituden von Basisbanddarstellungen der Vielzahl von Komponententrägern, wobei die Anzahl der Komponententräger in der Vielzahl von Komponententrägern des trägeraggregierten Signals größer als oder gleich 2 ist; und

Begrenzen der Basisbanddarstellungen der Vielzahl von Komponententrägern, wenn die geschätzte Spitze des trägeraggregierten Signals größer als eine vordefinierte Begrenzungsschwelle ist,

wobei das Schätzen der Spitze des trägeraggregierten Signals Folgendes umfasst:

Bestimmen der Momentanamplituden der Basisbanddarstellungen der Vielzahl von Komponententrägern des trägeraggregierten Signals;

Gewichten der Momentanamplituden gemäß Durchschnittsleistungspegeln der Vielzahl von Komponententrägern des trägeraggregierten Signals; und

Summieren der gewichteten Momentanamplituden der Basisbanddarstellungen der Vielzahl von Komponententrägern des trägeraggregierten Signals, um die geschätzte Spitze des trägeraggregierten Signals bereitzustellen.

2. Verfahren nach Anspruch 1, wobei das Begrenzen der Basisbanddarstellungen der Vielzahl von Komponententrägern das Anwenden einer gleichen Spitzenverringerung auf jeden Komponententräger der Vielzahl von Komponententrägern umfasst, wenn die geschätzte Spitze des trägeraggregierten Signals größer ist als die vordefinierte Begrenzungsschwelle, und optional wobei die Verringerung der gleichen Spitze als $(S - C) / 2$ definiert ist, wobei $S$ die Summierung der Momentanamplituden der Basisbanddarstellungen der Vielzahl von Komponententrägern des trägeraggregierten Signals ist und $C$ die vordefinierte Begrenzungsschwelle ist.

3. Verfahren nach Anspruch 1, wobei das Begrenzen der Basisbanddarstellungen der Vielzahl von Komponententrägern das Begrenzen der Basisbanddarstellungen der Vielzahl von Komponententrägern gemäß einem Scheitelfaktorverringerungsschema umfasst, das unterschiedliche Anforderungen an die Fehlervektorgröße, EVM, für die Vielzahl von Komponententrägern berücksichtigt, wenn die geschätzte Spitze des trägeraggregierten Signals größer ist als die vordefinierte Begrenzungsschwelle, und optional wobei die Begrenzung der Basisbanddarstellungen der Vielzahl von Komponententrägern gemäß dem Scheitelfaktorverringerungsschema, das unterschiedliche EVM-Anforderungen für die Vielzahl von Komponententrägern berücksichtigt, das Begrenzen der Basisbanddarstellungen der Vielzahl von Komponententrägern gemäß Folgendem umfasst:

$$\forall k \in \{1..N\}, \text{If} \left( S = \sum_{i=1}^{N} G_i \cdot |\tilde{x}_i(t)| \right) > C$$

$$=> \left| \tilde{x}_{k\_begrenzt}(n) \right| = G_k \cdot |\tilde{x}_k(n)| - \alpha_k \cdot (S - C)$$

wobei $C$ der vorbestimmte Begrenzungsschwellenwert ist, $\tilde{x}_{i-begrenzt}(n)$ die begrenzte Basisbanddarstellung des Komponententrägers ist, und $\alpha_1, ... \alpha_N$ Spitzenverringerungsfaktoren sind, die die Bedingung $\sum_{i=1}^{N} \alpha_i = 1$ erfüllen.

4. Verfahren nach Anspruch 1, wobei die Gewichtung der Momentanamplituden für jeden Komponententräger der Vielzahl von Komponententrägern das Berechnen der gewichteten Momentanamplitude für den Komponententräger wie folgt umfasst:

$$G_i \cdot |\tilde{x}_i(n)|,$$

wobei $x_i(n)$ die Basisbanddarstellung des Komponententrägers ist und $G_i$ ein Gewichtungsfaktor für den Komponententräger ist, und optional
wobei der Gewichtungsfaktor für den Komponententräger wie folgt definiert ist:

$$G_i = \sqrt{\frac{P_i}{Mittelwert(|\tilde{x}_i(n)|^2/100)}},$$

wobei $P_i$ der durchschnittliche Leistungspegel des Komponententrägers ist.

5. Verfahren nach Anspruch 4, wobei das Begrenzen der Basisbanddarstellungen der Vielzahl von Komponententrägem das Begrenzen der Basisbanddarstellungen der Vielzahl von Komponententrägem gemäß einem Scheitelfaktorverringerungsschema umfasst, das unterschiedliche durchschnittliche Leistungspegel für die Vielzahl von Komponententrägem berücksichtigt, wenn die geschätzte Spitze des trägeraggregierten Signals größer ist als der vordefinierte Begrenzungsschwellenwert.

6. Verfahren nach Anspruch 5, wobei das Begrenzen der Basisbanddarstellungen der Vielzahl von Komponententrägem gemäß dem Scheitelfaktorverringerungsschema, das unterschiedliche durchschnittliche Leistungspegel für die Vielzahl von Komponententrägem berücksichtigt, das Begrenzen der Basisbanddarstellungen der Vielzahl von Komponententrägem gemäß Folgendem umfasst:

$$\forall k \in \{1..N\}, \text{If}\left(S = \sum_{i=1}^{N} G_i \cdot |\tilde{x}_i(t)|\right) > C$$

$$=> \left|\tilde{x}_{k\_begrenzt}(n)\right| = \frac{G_k \cdot |\tilde{x}_k(t)|}{S} \cdot C$$

wobei $C$ der vorbestimmte Begrenzungsschwellwert ist und $\tilde{x}_{i\_begrenzt}(n)$ die begrenzte Basisbanddarstellung des Komponententrägers ist oder
wobei die Begrenzung der Basisbanddarstellungen der Vielzahl von Komponententrägem gemäß dem Scheitelfaktorverringerungsschema, das unterschiedliche durchschnittliche Leistungspegel für die Vielzahl von Komponententrägem berücksichtigt, das Begrenzen der Basisbanddarstellungen der Vielzahl von Komponententrägem gemäß Folgendem umfasst:

$$\forall k \in \{1..N\}, \text{If}\left(S = \sum_{i=1}^{N} G_i \cdot |\tilde{x}_i(t)|\right) > C$$

$$=> \left|\tilde{x}_{k\_begrenzt}(n)\right| = G_k \cdot |\tilde{x}_k(n)| - (S - C)$$

wobei C der vorbestimmte Begrenzungsschwellwert ist und $\tilde{x}_{i\_begrenzt}(n)$ die begrenzte Basisbanddarstellung des Komponententrägers ist.

7. Verfahren nach Anspruch 4, wobei das Begrenzen der Basisbanddarstellungen der Vielzahl von Komponententrägem das Begrenzen der Basisbanddarstellungen der Vielzahl von Komponententrägem gemäß einem Scheitelfaktorverringerungsschema umfasst, das sowohl unterschiedliche durchschnittliche Leistungspegel für die Vielzahl von Komponententrägem als auch unterschiedliche Fehlervektorgrößen-, EVM, Anforderungen für die Vielzahl von Komponententrägem berücksichtigt, wenn die geschätzte Spitze des trägeraggregierten Signals größer ist als der vordefinierte Begrenzungsschwellenwert, und optional
wobei die Begrenzung der Basisbanddarstellungen der Vielzahl von Komponententrägem gemäß dem Scheitelfaktorverringerungsschema, das sowohl unterschiedliche durchschnittliche Leistungspegel für die Vielzahl von Komponententrägem als auch unterschiedliche EVM-Anforderungen berücksichtigt, das Begrenzen der Basisbanddarstellungen der Vielzahl von Komponententrägem gemäß Folgendem umfasst:

$$\forall k \in \{1..N\}, \text{If}\left(S = \sum_{i=1}^{N} G_i \cdot |\tilde{x}_i(t)|\right) > C$$

$$\Rightarrow |\tilde{x}_{k\_begrenzt}(n)| = G_k \cdot |\tilde{x}_k(n)| - \alpha_k \cdot (S - C)$$

wobei *C* der vorbestimmte Begrenzungsschwellenwert ist, $\tilde{x}_{i\_begrenzt}$ *(n)* die begrenzte Basisbanddarstellung des Komponententrägers ist, und $\alpha_1,... \alpha_N$ Spitzenverringerungsfaktoren sind, die die Bedingung $\sum_{i=1}^{N} \alpha_i = 1$ erfüllen.

8. Scheitelfaktorreduktionssystem (24) für ein trägeraggregiertes Signal, das Folgendes umfasst:

einen Signalamplitudenschätzer (26), der dafür konfiguriert ist, eine Spitze eines trägeraggregierten Signals zu schätzen, das eine Vielzahl von Komponententrägem umfasst, wobei der Signalamplitudenschätzer dafür konfiguriert ist, die Spitze des trägeraggregierten Signals basierend auf einer Summierung von Momentanamplituden von Basisbanddarstellungen der Vielzahl von Komponententrägem zu schätzen, wobei die Anzahl der Komponententräger in der Vielzahl von Komponententrägem des trägeraggregierten Signals größer als oder gleich 2 ist; und
eine Begrenzungsschaltung (27), die dafür konfiguriert ist, die Basisbanddarstellungen der Vielzahl von Komponententrägem zu begrenzen, wenn die geschätzte Spitze des trägeraggregierten Signals größer ist als ein vordefinierter Begrenzungsschwellenwert,
wobei der Signalamplitudenschätzer (26) Folgendes umfasst:

eine Vielzahl von Größenoperatoren (23), die dafür konfiguriert sind, die momentanen Amplituden der Basisbanddarstellungen der Vielzahl von Komponententrägem bereitzustellen, wobei jeder Größenoperator (23) der Vielzahl von Größenoperatoren (23) dafür konfiguriert ist, die Momentanamplitude der Basisbanddarstellung eines anderen der Vielzahl von Komponententrägem bereitzustellen;
eine Gewichtungsschaltung (82), die dafür konfiguriert ist, die Momentanamplituden gemäß Durchschnittsleistungspegeln der Vielzahl von Komponententrägem des trägeraggregierten Signals zu gewichten; und
einen Addierer (25), der dafür konfiguriert ist, die gewichteten Momentanamplituden der Basisbanddarstellungen der Vielzahl von Komponententrägem des trägeraggregierten Signals zu summieren, um die geschätzte Spitze des aggregierten Trägersignals bereitzustellen.

9. System (24) nach Anspruch 8, wobei die Begrenzungsschaltung (27) dafür konfiguriert ist, die Basisbanddarstellungen der Vielzahl von Komponententrägem basierend auf einer gleichen Spitzenreduktion pro Komponententrägerschema zu begrenzen, wenn die geschätzte Spitze des trägeraggregierten Signals größer ist als der vordefinierte Begrenzungsschwellenwert, und optional
wobei die gleiche Spitzenreduktion als *(S* - C*)/2* definiert ist, wobei *S* die Summe der Momentanamplituden der Basisbanddarstellungen der Vielzahl von Komponententrägem des trägeraggregierten Signals ist und *C* der vorbestimmte Begrenzungsgrenzwert ist.

10. System (24) nach Anspruch 8, wobei die Begrenzungsschaltung (27) dafür konfiguriert ist, die Basisbanddarstellungen der Vielzahl von Komponententrägem gemäß einem Scheitelfaktorreduktionsschema zu begrenzen, das unterschiedliche Anforderungen an die Fehlervektorgröße, EVM, für die Vielzahl von Komponententrägem berücksichtigt, wenn die geschätzte Spitze des trägeraggregierten Signals größer ist als der vordefinierte Begrenzungsschwellenwert, und optional
wobei die Begrenzungsschaltung (27) dafür konfiguriert ist, die Basisbanddarstellungen der Vielzahl von Komponententrägem gemäß dem Scheitelfaktorreduktionsschema zu begrenzen, das unterschiedliche EVM-Anforderungen für die Vielzahl von Komponententrägern durch Begrenzen der Basisbanddarstellungen der Vielzahl von Komponententrägern gemäß Folgendem berücksichtigt:

$$\forall k \in \{1..N\},\, \mathrm{If}\left(S = \sum_{i=1}^{N} G_i \cdot |\tilde{x}_i(t)|\right) > C$$

$$\Rightarrow \left|\tilde{x}_{k\_begrenzt}(n)\right| = G_k \cdot |\tilde{x}_k(n)| - \alpha_k \cdot (S - C)$$

wobei C der vorbestimmte Begrenzungsschwellenwert ist, $\tilde{x}_{i\_begrenzt}(n)$ die begrenzte Basisbanddarstellung des Komponententrägers ist, und $\alpha_1,...\, \alpha_N$ Spitzenverringerungsfaktoren sind, die die Bedingung $\sum_{i=1}^{N} \alpha_i = 1$ erfüllen.

11. System (24) nach Anspruch 8, wobei, zur Gewichtung der Momentanamplituden die Gewichtungsschaltung (82) dafür konfiguriert ist, für jeden Komponententräger der Vielzahl von Komponententrägern die gewichtete Momentanamplitude für den Komponententräger als Folgendes zu berechnen:

$$G_i \cdot |\tilde{x}_i(n)|,$$

wobei $\tilde{x}_i(n)$ die Basisbanddarstellung des Komponententrägers ist und $G_i$ ein Gewichtungsfaktor für den Komponententräger ist, und optional
wobei der Gewichtungsfaktor für den Komponententräger wie folgt definiert ist:

$$G_i = \sqrt{\frac{P_i}{Mittelwert(|\tilde{x}_i(n)|^2/100)}},$$

wobei $P_i$ der durchschnittliche Leistungspegel des Komponententrägers ist.

12. System (24) nach Anspruch 11, wobei die Begrenzungsschaltung (27) dafür konfiguriert ist, die Basisbanddarstellungen der Vielzahl von Komponententrägern gemäß einem Scheitelfaktorreduktionsschema zu begrenzen, das unterschiedliche durchschnittliche Leistungspegel für die Vielzahl von Komponententrägern berücksichtigt, wenn die geschätzte Spitze des trägeraggregierten Signals größer ist als der vordefinierte Begrenzungsschwellenwert.

13. System (24) nach Anspruch 12, wobei die Begrenzungsschaltung (27) dafür konfiguriert ist, die Basisbanddarstellungen der Vielzahl von Komponententrägern gemäß dem Scheitelfaktorreduktionsschema zu begrenzen, das unterschiedliche durchschnittliche Leistungspegel für die Vielzahl von Komponententrägern durch Begrenzen der Basisbanddarstellungen der Vielzahl von Komponententrägern gemäß Folgendem berücksichtigt:

$$\forall k \in \{1..N\},\, \mathrm{If}\left(S = \sum_{i=1}^{N} G_i \cdot |\tilde{x}_i(t)|\right) > C$$

$$\Rightarrow \left|\tilde{x}_{k\_begrenzt}(n)\right| = G_k \cdot |\tilde{x}_k(n)| - \alpha_k \cdot (S - C)$$

wobei C der vorbestimmte Begrenzungsschwellwert ist und $\tilde{x}_{i\_begrenzt}(n)$ die begrenzte Basisbanddarstellung des Komponententrägers ist oder
wobei die Begrenzungsschaltung (27) dafür konfiguriert ist, die Basisbanddarstellungen der Vielzahl von Komponententrägern gemäß dem Scheitelfaktorreduktionsschema zu begrenzen, das unterschiedliche durchschnittliche Leistungspegel für die Vielzahl von Komponententrägern durch Begrenzen der Basisbanddarstellungen der Vielzahl von Komponententrägern gemäß Folgendem berücksichtigt:

$$\forall k \in \{1..N\}, \text{If} \left( S = \sum_{i=1}^{N} G_i \cdot |\tilde{x}_i(t)| \right) > C$$

$$\Rightarrow \left| \tilde{x}_{k\_begrenzt}(n) \right| = G_k \cdot |\tilde{x}_k(n)| - \alpha_k \cdot (S - C)$$

wobei $C$ der vorbestimmte Begrenzungsschwellwert ist und $\tilde{x}_{i\_begrenzt}(n)$ die begrenzte Basisbanddarstellung des Komponententrägers ist.

14. System (24) nach Anspruch 11, wobei die Begrenzungsschaltung (27) dafür konfiguriert ist, die Basisbanddarstellungen der Vielzahl von Komponententrägern gemäß einem Scheitelfaktorreduktionsschema zu begrenzen, das sowohl unterschiedliche durchschnittliche Leistungspegel für die Vielzahl von Komponententrägern als auch unterschiedliche Fehlervektorgrößen-, EVM, Anforderungen für die Vielzahl von Komponententrägern berücksichtigt, wenn die geschätzte Spitze des trägeraggregierten Signals größer ist als der vordefinierte Begrenzungsschwellenwert, und optional
wobei die Begrenzungsschaltung (27) dafür konfiguriert ist, die Basisbanddarstellungen der Vielzahl von Komponententrägern gemäß einem Scheitelfaktorreduktionsschema zu begrenzen, das sowohl unterschiedliche durchschnittliche Leistungspegel für die Vielzahl von Komponententrägern als auch unterschiedliche EVM-Anforderungen durch Begrenzen der Basisbanddarstellungen der Vielzahl von Komponententrägern gemäß Folgendem berücksichtigt:

$$\forall k \in \{1..N\}, \text{If} \left( S = \sum_{i=1}^{N} G_i \cdot |\tilde{x}_i(t)| \right) > C$$

$$\Rightarrow \left| \tilde{x}_{k\_begrenzt}(n) \right| = G_k \cdot |\tilde{x}_k(n)| - \alpha_k \cdot (S - C)$$

wobei $C$ der vorbestimmte Begrenzungsschwellenwert ist, $\tilde{x}_{i\_begrenzt}(n)$ die begrenzte Basisbanddarstellung des

Komponententrägers ist, und $\alpha_1,... \alpha_N$ Spitzenverringerungsfaktoren sind, die die Bedingung $\sum_{i=1}^{N} \alpha_i = 1$ erfüllen.

## Revendications

1. Procédé de fourniture de réduction de facteur de crête pour un signal avec agrégation de porteuses, comprenant les étapes ci-dessous consistant à :

estimer un pic d'un signal avec agrégation de porteuses comprenant une pluralité de porteuses composantes sur la base d'une sommation d'amplitudes instantanées de représentations en bande de base de la pluralité de porteuses composantes, le nombre de porteuses composantes dans la pluralité de porteuses composantes du signal avec agrégation de porteuses étant supérieur ou égal à 2 ; et
écrêter les représentations en bande de base de la pluralité de porteuses composantes si le pic estimé du signal avec agrégation de porteuses est supérieur à un seuil d'écrêtage prédéfini ;
dans lequel l'étape d'estimation du pic du signal avec agrégation de porteuses comprend les étapes ci-dessous consistant à :

déterminer les amplitudes instantanées des représentations en bande de base de la pluralité de porteuses composantes du signal avec agrégation de porteuses ;
pondérer les amplitudes instantanées selon des niveaux de puissance moyenne de la pluralité de porteuses composantes du signal avec agrégation de porteuses ; et
sommer les amplitudes instantanées pondérées des représentations en bande de base de la pluralité de porteuses composantes du signal avec agrégation de porteuses en vue de fournir le pic estimé du signal avec agrégation de porteuses.

2. Procédé selon la revendication 1, dans lequel l'étape d'écrêtage des représentations en bande de base de la pluralité de porteuses composantes comprend l'étape consistant à appliquer une réduction de pic égale à chaque porteuse composante de la pluralité de porteuses composantes si le pic estimé du signal avec agrégation de porteuses est supérieur au seuil d'écrêtage prédéfini, et facultativement,
dans lequel la réduction de pic égale est définie comme $(S - C) / 2$ où « $S$ » est la sommation des amplitudes instantanées des représentations en bande de base de la pluralité de porteuses composantes du signal avec agrégation de porteuses et « $C$ » est le seuil d'écrêtage prédéfini.

3. Procédé selon la revendication 1, dans lequel l'étape d'écrêtage des représentations en bande de base de la pluralité de porteuses composantes consiste à écrêter les représentations en bande de base de la pluralité de porteuses composantes selon un schéma de réduction de facteur de crête qui tient compte de différentes exigences d'amplitude de vecteur d'erreur, EVM, pour la pluralité de porteuses composantes si le pic estimé du signal avec agrégation de porteuses est supérieur au seuil d'écrêtage prédéfini, et, facultativement,
dans lequel l'étape d'écrêtage des représentations en bande de base de la pluralité de porteuses composantes selon le schéma de réduction de facteur de crête qui tient compte de différentes exigences d'amplitude EVM pour la pluralité de porteuses composantes consiste à écrêter les représentations en bande de base de la pluralité de porteuses composantes selon ce qui suit :

$$\forall k \in \{1..N\}, \text{If} \left( S = \sum_{i=1}^{N} G_i \cdot |\tilde{x}_i(t)| \right) > C$$
$$=> \left| \tilde{x}_{k\_clipped}(n) \right| = G_k \cdot |\tilde{x}_k(n)| - \alpha_k \cdot (S - C)$$

où « $C$ » est le seuil d'écrêtage prédéfini, $\tilde{x}_{i\_clipped}(n)$ est la représentation en bande de base écrêtée de la porteuse composante, et $\alpha_1,..., \alpha_N$ sont des facteurs de réduction de pic qui satisfont la condition $\sum_{i=1}^{N} \alpha_i = 1$.

4. Procédé selon la revendication 1, dans lequel l'étape de pondération des amplitudes instantanées comprend, pour chaque porteuse composante de la pluralité de porteuses composantes, l'étape consistant à calculer l'amplitude instantanée pondérée pour la porteuse composante en tant que :

$$G_i \cdot |\tilde{x}_i(n)|,$$

où $\tilde{x}_i(n)$ est la représentation en bande de base de la porteuse composante et « $G_i$ » est un facteur de pondération pour la porteuse composante, et, facultativement,
dans lequel le facteur de pondération pour la porteuse composante est défini en tant que :

$$G_i = \sqrt{\frac{P_i}{moyenne\left(|\tilde{x}_i(n)|^2 / 100\right)}}$$

où $P_i$ est le niveau de puissance moyenne de la porteuse composante.

5. Procédé selon la revendication 4, dans lequel l'étape d'écrêtage des représentations en bande de base de la pluralité de porteuses composantes consiste à écrêter les représentations en bande de base de la pluralité de porteuses composantes selon un schéma de réduction de facteur de crête qui tient compte de différents niveaux de puissance moyenne pour la pluralité de porteuses composantes, si le pic estimé du signal avec agrégation de porteuses est supérieur au seuil d'écrêtage prédéfini.

6. Procédé selon la revendication 5, dans lequel l'étape d'écrêtage des représentations en bande de base de la pluralité de porteuses composantes selon le schéma de réduction de facteur de crête qui tient compte de différents niveaux de puissance moyenne pour la pluralité de porteuses composantes consiste à écrêter les représentations en bande de base de la pluralité de porteuses composantes selon ce qui suit :

$$\forall k \in \{1..N\}, \text{If} \left( S = \sum_{i=1}^{N} G_i \cdot |\tilde{x}_i(t)| \right) > C$$
$$=> |\tilde{x}_{k\_clipped}(n)| = \frac{G_k \cdot |\tilde{x}_k(t)|}{S} \cdot C$$

où « C » est le seuil d'écrêtage prédéfini et $\tilde{x}_{i\_clipped}(n)$ est la représentation en bande de base écrêtée de la porteuse composante ; ou

dans lequel l'étape d'écrêtage des représentations en bande de base de la pluralité de porteuses composantes selon le schéma de réduction de facteur de crête qui tient compte de différents niveaux de puissance moyenne pour la pluralité de porteuses composantes consiste à écrêter les représentations en bande de base de la pluralité de porteuses composantes selon ce qui suit :

$$\forall k \in \{1..N\}, \text{If} \left( S = \sum_{i=1}^{N} G_i \cdot |\tilde{x}_i(t)| \right) > C$$
$$=> |\tilde{x}_{k\_clipped}(n)| = G_k \cdot |\tilde{x}_k(n)| - (S - C)$$

où « C » est le seuil d'écrêtage prédéfini et $\tilde{x}_{i\_clipped}(n)$ est la représentation en bande de base écrêtée de la porteuse composante.

7. Procédé selon la revendication 4, dans lequel l'étape d'écrêtage des représentations en bande de base de la pluralité de porteuses composantes consiste à écrêter les représentations en bande de base de la pluralité de porteuses composantes selon un schéma de réduction de facteur de crête qui tient compte à la fois de différents niveaux de puissance moyenne pour la pluralité de porteuses composantes et de différentes exigences d'amplitude de vecteur d'erreur, EVM, pour la pluralité de porteuses composantes si le pic estimé du signal avec agrégation de porteuses est supérieur au seuil d'écrêtage prédéfini, et facultativement,

dans lequel l'étape d'écrêtage des représentations en bande de base de la pluralité de porteuses composantes selon le schéma de réduction de facteur de crête qui tient compte à la fois de différents niveaux de puissance moyenne pour la pluralité de porteuses composantes et de différentes exigences d'amplitude EVM, consiste à écrêter les représentations en bande de base de la pluralité de porteuses composantes selon ce qui suit :

$$\forall k \in \{1..N\}, \text{If} \left( S = \sum_{i=1}^{N} G_i \cdot |\tilde{x}_i(t)| \right) > C$$
$$=> |\tilde{x}_{k\_clipped}(n)| = G_k \cdot |\tilde{x}_k(n)| - \alpha_k \cdot (S - C)$$

où « C » est le seuil d'écrêtage prédéfini, $\tilde{x}_{i\_clipped}(n)$ est la représentation en bande de base écrêtée de la porteuse composante, et $\alpha_1, ..., \alpha_N$ sont des facteurs de réduction de pic qui satisfont la condition $\sum_{i=1}^{N} \alpha_i = 1$.

8. Système de réduction de facteur de crête (24) pour un signal avec agrégation de porteuses, comprenant :

un estimateur d'amplitude de signal (26) configuré de manière à estimer un pic d'un signal avec agrégation de porteuses comprenant une pluralité de porteuses composantes, l'estimateur d'amplitude de signal étant configuré de manière estimer le pic du signal avec agrégation de porteuses sur la base d'une sommation d'amplitudes instantanées de représentations en bande de base de la pluralité de porteuses composantes, le nombre de porteuses composantes dans la pluralité de porteuses composantes du signal avec agrégation de porteuses étant supérieur ou égal à 2 ; et
un montage de circuits d'écrêtage (27) configuré de manière à écrêter les représentations en bande de base de la pluralité de porteuses composantes si le pic estimé du signal avec agrégation de porteuses est supérieur à un seuil d'écrêtage prédéfini ;

dans lequel l'estimateur d'amplitude de signal (26) comprend :

une pluralité d'opérateurs d'amplitude (23) configurée de manière à fournir les amplitudes instantanées des représentations en bande de base de la pluralité de porteuses composantes, chaque opérateur d'amplitude (23) de la pluralité d'opérateurs d'amplitude (23) étant configuré de manière à fournir l'amplitude instantanée de la représentation en bande de base d'une porteuse différente parmi la pluralité de porteuses composantes ;
un montage de circuits de pondération (82) configuré de manière à pondérer les amplitudes instantanées selon des niveaux de puissance moyenne de la pluralité de porteuses composantes du signal avec agrégation de porteuses ; et
un sommateur (25) configuré de manière à sommer les amplitudes instantanées pondérées des représentations en bande de base de la pluralité de porteuses composantes du signal avec agrégation de porteuses en vue de fournir le pic estimé du signal avec agrégation de porteuses.

9. Système (24) selon la revendication 8, dans lequel le montage de circuits d'écrêtage (27) est configuré de manière à écrêter les représentations en bande de base de la pluralité de porteuses composantes sur la base d'une réduction de pic égale par schéma de porteuse composante, si le pic estimé du signal avec agrégation de porteuses est supérieur au seuil d'écrêtage prédéfini, et, facultativement,
dans lequel la réduction de pic égale est définie comme ($S - C$) / 2 où « $S$ » est la sommation des amplitudes instantanées des représentations en bande de base de la pluralité de porteuses composantes du signal avec agrégation de porteuses et « $C$ » est le seuil d'écrêtage prédéfini.

10. Système (24) selon la revendication 8, dans lequel le montage de circuits d'écrêtage (27) est configuré de manière à écrêter les représentations en bande de base de la pluralité de porteuses composantes selon un schéma de réduction de facteur de crête qui tient compte de différentes exigences d'amplitude de vecteur d'erreur, EVM, pour la pluralité de porteuses composantes, si le pic estimé du signal avec agrégation de porteuses est supérieur au seuil d'écrêtage prédéfini, et, facultativement,
dans lequel le montage de circuits d'écrêtage (27) est configuré de manière à écrêter les représentations en bande de base de la pluralité de porteuses composantes selon le schéma de réduction de facteur de crête qui tient compte de différentes exigences d'amplitude EVM pour la pluralité de porteuses composantes en écrêtant les représentations en bande de base de la pluralité de porteuses composantes selon ce qui suit :

$$\forall k \in \{1..N\}, \text{If} \left( S = \sum_{i=1}^{N} G_i \cdot |\tilde{x}_i(t)| \right) > C$$
$$=> |\tilde{x}_{k\_clipped}(n)| = G_k \cdot |\tilde{x}_k(n)| - \alpha_k \cdot (S - C)$$

où « $C$ » est le seuil d'écrêtage prédéfini, $\tilde{x}_{i\_clipped}(n)$ est la représentation en bande de base écrêtée de la porteuse composante, et $\alpha_1,..., \alpha_N$ sont des facteurs de réduction de pic qui satisfont la condition $\sum_{i=1}^{N} \alpha_i = 1$.

11. Système (24) selon la revendication 8, dans lequel, en vue de pondérer les amplitudes instantanées, le montage de circuits de pondération (82) est configuré de manière à, pour chaque porteuse composante de la pluralité de porteuses composantes, calculer l'amplitude instantanée pondérée pour la porteuse composante en tant que :

$$G_i \cdot |\tilde{x}_i(n)|,$$

où $\tilde{x}_i(n)$ est la représentation en bande de base de la porteuse composante et « $G_i$ » est un facteur de pondération pour la porteuse composante, et, facultativement,
dans lequel le facteur de pondération pour la porteuse composante est défini en tant que :

$$G_i = \sqrt{\frac{P_i}{moyenne(|\tilde{x}_i(n)|^2/100)}}$$

où $P_i$ est le niveau de puissance moyenne de la porteuse composante.

12. Système (24) selon la revendication 11, dans lequel le montage de circuits d'écrêtage (27) est configuré de manière à écrêter les représentations en bande de base de la pluralité de porteuses composantes selon un schéma de réduction de facteur de crête qui tient compte de différents niveaux de puissance moyenne pour la pluralité de porteuses composantes, si le pic estimé du signal avec agrégation de porteuses est supérieur au seuil d'écrêtage prédéfini.

13. Système (24) selon la revendication 12, dans lequel le montage de circuits d'écrêtage (27) est configuré de manière à écrêter les représentations en bande de base de la pluralité de porteuses composantes selon le schéma de réduction de facteur de crête qui tient compte de différents niveaux de puissance moyenne pour la pluralité de porteuses composantes, en écrêtant les représentations en bande de base de la pluralité de porteuses composantes selon ce qui suit :

$$\forall k \in \{1..N\}, \text{If} \left(S = \sum_{i=1}^{N} G_i \cdot |\tilde{x}_i(t)|\right) > C$$
$$=> |\tilde{x}_{k\_clipped}(n)| = G_k \cdot |\tilde{x}_k(n)| - \alpha_k \cdot (S - C)$$

où « C » est le seuil d'écrêtage prédéfini et $\tilde{x}_{i\_clipped}(n)$ est la représentation en bande de base écrêtée de la porteuse composante ; ou
dans lequel le montage de circuits d'écrêtage (27) est configuré de manière à écrêter les représentations en bande de base de la pluralité de porteuses composantes selon le schéma de réduction de facteur de crête qui tient compte de différents niveaux de puissance moyenne pour la pluralité de porteuses composantes en écrêtant les représentations en bande de base de la pluralité de porteuses composantes selon ce qui suit :

$$\forall k \in \{1..N\}, \text{If} \left(S = \sum_{i=1}^{N} G_i \cdot |\tilde{x}_i(t)|\right) > C$$
$$=> |\tilde{x}_{k\_clipped}(n)| = G_k \cdot |\tilde{x}_k(n)| - \alpha_k \cdot (S - C)$$

où « C » est le seuil d'écrêtage prédéfini et $\tilde{x}_{i\_clipped}(n)$ est la représentation en bande de base écrêtée de la porteuse composante.

14. Système (24) selon la revendication 11, dans lequel le montage de circuits d'écrêtage (27) est configuré de manière à écrêter les représentations en bande de base de la pluralité de porteuses composantes selon un schéma de réduction de facteur de crête qui tient compte à la fois de différents niveaux de puissance moyenne pour la pluralité de porteuses composantes et de différentes exigences d'amplitude de vecteur d'erreur, EVM, pour la pluralité de porteuses composantes, si le pic estimé du signal avec agrégation de porteuses est supérieur au seuil d'écrêtage prédéfini, et, facultativement,
dans lequel le montage de circuits d'écrêtage (27) est configuré de manière à écrêter les représentations en bande de base de la pluralité de porteuses composantes selon un schéma de réduction de facteur de crête qui tient compte à la fois de différents niveaux de puissance moyenne pour la pluralité de porteuses composantes et de différentes exigences d'amplitude EVM en écrêtant les représentations en bande de base de la pluralité de porteuses composantes selon ce qui suit :

$$\forall k \in \{1..N\}, \text{If} \left( S = \sum_{i=1}^{N} G_i \cdot |\tilde{x}_i(t)| \right) > C$$
$$=> |\tilde{x}_{k\_clipped}(n)| = G_k \cdot |\tilde{x}_k(n)| - \alpha_k \cdot (S - C)$$

où « $C$ » est le seuil d'écrêtage prédéfini, $\tilde{x}_{i\_clipped}(n)$ est la représentation en bande de base écrêtée de la porteuse composante, et $\alpha_1, ..., \alpha_N$ sont des facteurs de réduction de pic qui satisfont la condition $\sum_{i=1}^{N} \alpha_i = 1$.

FIG. 1
(PRIOR ART)

FIG. 3

FIG. 2

*FIG. 4*

*FIG. 5*

*FIG. 6*

FIG. 7

FIG. 8

*FIG. 9*

*FIG. 10*

*FIG. 11*

*FIG. 12*

FIG. 13

*FIG. 14*

*FIG. 15*

START

CALCULATE THE AMPLITUDE OF EACH OF A PLURALITY OF CARRIER SIGNALS OF INTER-BAND AGGREGATED CARRIER SIGNALS — S100

PRODUCE AN ESTIMATE OF AN ENVELOPE OF A COMBINATION OF THE CARRIER SIGNALS BASED ON A SUM OF THE CALCULATED AMPLITUDES OF THE PLURALITY OF CARRIER SIGNALS — S102

COMPARE THE ESTIMATE OF THE ENVELOPE OF THE COMBINATION OF THE CARRIER SIGNALS TO A CLIPPING THRESHOLD TO DETERMINE WHETHER TO CLIP EACH OF THE PLURALITY OF CARRIER SIGNALS — S104

END

*FIG. 16*

START

DOES ENVELOPE
ESTIMATE EXCEED
THRESHOLD? — S105

NO

YES

FORM A RATIO OF THE CALCULATED AMPLITUDE OF A FIRST
CARRIER SIGNAL TO THE SUM OF THE AMPLITUDES
OF EACH OF THE PLURALITY OF CARRIER SIGNALS;
REPEAT FOR EACH CARRIER SIGNAL — S106

MULTIPLY THE RATIO BY THE CLIPPING THRESHOLD — S108

APPLY LOW PASS FILTERING — S110

END

*FIG. 17*

## REFERENCES CITED IN THE DESCRIPTION

**Non-patent literature cited in the description**

- **FEHRI BILEL et al.** Joint Dual-band Crest Factor Reduction and Digital Predistortion of Power Amplifiers Driven by Inter-Band Carrier Aggregated Signals. *2014 IEEE MTT-S International Microwave Symposium (IMS2014),* 01 June 2014, 1-4